# EUROPEAN PATENT SPECIFICATION

(11) **EP 4 425 750 B1**
(45) Date of publication and mention of the grant of the patent: **02.09.2026**
(21) Application number: 24154441.0
(22) Date of filing: 29.01.2024
(51) Int. Cl.: H02K 1/16, H02K 15/085

(54) **STATOR CORE, MOTOR, MANUFACTURING METHOD OF STATOR, POWERTRAIN, AND VEHICLE**
STATORKERN, MOTOR, HERSTELLUNGSVERFAHREN FÜR DEN STATOR, ANTRIEBSSTRANG UND FAHRZEUG
NOYAU DE STATOR, MOTEUR, PROCÉDÉ DE FABRICATION DE STATOR, GROUPE MOTOPROPULSEUR ET VÉHICULE

(30) Priority: 28.02.2023 CN 202310224870
(43) Date of publication of application: 04.09.2024
(73) Proprietor: Huawei Digital Power Technologies Co., Ltd., Shenzhen, Guangdong 518043 (CN)
(72) Inventor: WU, Chaoqiang, Shenzhen, 518043 (CN); LI, Hongbin, 518043 Shenzhen (CN); JIANG, Kui, 518043 Shenzhen (CN)
(74) Representative: Gill Jennings & Every LLP

(56) References cited:
- CN-B- 114 142 635
- JP-A- 2011 125 176
- JP-A- 2011 172 440
- JP-A- 2022 501 984
- US-A1- 2004 020 027

## Description

### TECHNICAL FIELD

This application relates to the field of motor technologies, and in particular, to a stator core, a motor, a manufacturing method of a stator, a powertrain, and a vehicle.

### BACKGROUND

A stator core is an important part of a motor, and a structure of the stator core affects performance of the motor. To improve a slot fill factor of the stator core, the stator core usually adopts a form of single tooth splicing or tooth-yoke separation. However, the two types of stator cores are difficult to adapt to various types of stator windings, which is not conducive to application of the motor.

JP 2022 501984 A discloses a stator comprising a plurality of teeth of a toothed ring, and bridges of material each joining together two consecutive teeth of the ring.

US 2004/020027 A1 discloses a stator comprising a plurality of yoke portions clamping a bent linear segment forming the teeth.

### SUMMARY

This application provides a stator core, a motor, a manufacturing method of a stator, a powertrain, and a vehicle.

According to a first aspect, this application provides a stator core for a motor. The stator core includes a plurality of groups of first silicon steel sheets and one or more groups of second silicon steel sheets. The plurality of groups of first silicon steel sheets are adjacently arranged in an axial direction of the stator core, and a stacking assembly design can reduce an eddy current loss of the stator core. Each group of first silicon steel sheets includes a plurality of first silicon steel sheets, the plurality of first silicon steel sheets in each group of first silicon steel sheets are connected end to end to form a ring-shaped structure. An end-to-end connection design can improve concentricity of each group of first silicon steel sheets. Each group of second silicon steel sheets is cylindrical, and the one or more groups of second silicon steel sheets are sleeved on outer peripheral surfaces of the plurality of groups of first silicon steel sheets. The plurality of groups of second silicon steel sheets can improve structural strength of the plurality of groups of first silicon steel sheets. Each first silicon steel sheet includes an inner peripheral part and a plurality of spaced-apart tooth parts, one end of each tooth part is connected to the inner peripheral part, and the other end of each tooth part faces an inner peripheral surface of one group of second silicon steel sheets. The inner peripheral part is connected to one ends of two adjacent tooth parts to enclose one end of a gap between the two adjacent tooth parts, to improve NVH performance of the stator core. In a circumferential direction of the stator core, a width of the one end of each tooth part is less than a width of the other end of each tooth part. A stator winding can be better fastened to the gap, so that the stator core can adapt to various types of stator windings. Each group of second silicon steel sheets comprises a plurality of second silicon steel sheets, and the plurality of second silicon steel sheets in each group of second silicon steel sheets are connected end to end to form a ring-shaped structure through a clamping structure. The quantity of second silicon steel sheets in each group of second silicon steel sheets is less than the quantity of first silicon steel sheets in each group of first silicon steel sheets.

According to the stator core provided in this application, first, each first silicon steel sheet includes the plurality of tooth parts, and only a small quantity of first silicon steel sheets need to be disposed in each group of first silicon steel sheets to form a large quantity of tooth parts. In this way, the concentricity of the ring-shaped structure formed by each group of first silicon steel sheets can be ensured and a manufacturing process yield of the stator core can be effectively improved.

Second, in the circumferential direction of the stator core, the width of the one end of each tooth part is less than the width of the other end of each tooth part, and therefore a width difference of the gap at two ends in the radial direction of the stator core is small. The stator winding can be better fastened to the gap, so that the stator core can adapt to the various types of stator windings.

Third, the gap is disposed between the two adjacent tooth parts in each group of first silicon steel sheets and the gap has an opening, so that the stator core can implement two manners in which the stator winding is mounted in the axial direction and the radial direction of the stator core. The stator core can adapt to a plurality of types of stator windings, thereby improving adaptability of the stator core. In addition, the stator core provided in this application has a high slot fill factor. In addition, after being prefabricated and formed, the stator winding can be assembled into a stator slot in the radial direction of the stator core and from an opening of the stator slot, thereby reducing a quantity of welding points of the stator winding and reducing a welding failure rate.

Finally, in this application, the opening of the stator slot faces the plurality of groups of second silicon steel sheets, so that the stator winding can be assembled into the stator slot from an outer side of the plurality of groups of first silicon steel sheets in the radial direction of the stator core. Outer space of the plurality of groups of first silicon steel sheets is larger than inner space of the plurality of groups of first silicon steel sheets, which facilitates assembly of the stator winding.

In an implementation, each group of first silicon steel sheets includes one first silicon steel sheet. The one first silicon steel sheet is enclosed to form the ring-shaped structure. A quantity of first silicon steel sheets included in each group of first silicon steel sheets is small, and process difficulty when the first silicon steel sheet is enclosed to form the ring-shaped structure is small, which facilitates manufacturing of the stator core.

In an implementation, each group of first silicon steel sheets includes a plurality of first silicon steel sheets, and the plurality of first silicon steel sheets in an arc shape are connected end to end to form a ring-shaped structure.

In an implementation, in the plurality of groups of first silicon steel sheets, quantities of first silicon steel sheets in all groups of first silicon steel sheets are the same. The quantities of first silicon steel sheets in all groups of first silicon steel sheets are the same, which facilitates the manufacturing of the stator core.

In an implementation, a plurality of first silicon steel sheets in the plurality of groups of first silicon steel sheets are a same first silicon steel sheet. The first silicon steel sheets in the plurality of groups of first silicon steel sheets have a same structure, shape, size, and quantity of tooth parts included therein, and only one type of first silicon steel sheet needs to be manufactured during the manufacturing of the stator core, which helps reduce a quantity of elements that need to be manufactured in a production process of the stator core. Therefore, the production process of the stator core is simplified and further, production efficiency of the stator core is improved and production costs of the stator core are reduced.

In an implementation, in the circumferential direction of the stator core, the width of each tooth part gradually increases from the one end close to the inner peripheral part to the other end away from the inner peripheral part. From the one end of the tooth part to the other end of the tooth part, the width of the tooth part gradually increases. The width of the tooth part changes uniformly to better clamp the stator winding.

In an implementation, in the stator core, a quantity of groups of second silicon steel sheets is less than a quantity of groups of first silicon steel sheets. The quantity of groups of second silicon steel sheets is small, a thickness of each group of second silicon steel sheets in the axial direction of the stator core is large, and overall stiffness of the plurality of groups of second silicon steel sheets is large, to provide better structural support for the plurality of groups of first silicon steel sheets and improve overall structural strength of the stator core.

In an implementation, in the circumferential direction of the stator core, two side walls that are of two adjacent tooth parts in each group of first silicon steel sheets and that are close to each other are parallel in a radial direction of the stator core. In the circumferential direction of the stator core, a distance between each tooth part and an adjacent tooth part from the one end close to the inner peripheral part to the other end away from the inner peripheral part is all the same, so that the two side walls that are of the two adjacent tooth parts and that are close to each other can better clamp and fasten the stator winding.

In an implementation, the tooth parts in the plurality of groups of first silicon steel sheets are sequentially arranged in the axial direction of the stator core to form a plurality of rows of tooth parts, and in the circumferential direction of the stator core, two side surfaces that are of two adjacent rows of tooth parts and that are close to each other are parallel in the radial direction of the stator core. Tooth parts in a same position in each group of first silicon steel sheets overlap. Projections of the plurality of tooth parts in the axial direction coincide. The two side surfaces that are of the two adjacent rows of tooth parts and that are close to each other are parallel in the radial direction of the stator core, so that a distance between each row of tooth parts and an adjacent row of tooth parts from one side close to the inner peripheral part to the other side away from the inner peripheral part is all the same and the two side surfaces that are of the two adjacent rows of tooth parts and that are close to each other can better clamp and fasten the stator winding.

In an implementation, in the radial direction of the stator core, a ratio of a thickness of the inner peripheral part to a thickness of the tooth part is greater than or equal to 0.02 and less than or equal to 0.08. A stator slot between two adjacent rows of tooth parts is provided with sufficient space for smooth assembly of the stator winding. In addition, the ratio of the thickness of the inner peripheral part to the thickness of the tooth part is moderate, a distance between the stator winding and the stator is not too large, and a magnetic resistance of the motor is small, thereby improving a performance index of the motor. In addition, the inner peripheral part has high strength to improve NVH performance of the motor.

In an implementation, in the radial direction of the stator core, a ratio of a thickness of the second silicon steel sheet to the thickness of the tooth part is greater than or equal to 1.2 and less than or equal to 1.7. Not only can overall strength of the stator core be improved, but also a weight of the stator core is not increased too much, thereby improving the performance index of the motor.

In an implementation, there is a gap between the two adjacent tooth parts in each group of first silicon steel sheets, and in the circumferential direction of the stator core, a ratio of a maximum width of the tooth part to a width of the gap is greater than or equal to 1.1 and less than or equal to 1.8. Not only can high structural strength of the tooth part be ensured to improve the overall structural strength of the stator core, but also mounting of the stator winding can be facilitated.

In an implementation, in the circumferential direction of the stator core, a first concave part that is concave towards the other end of the inner peripheral part is disposed at one end of the inner peripheral part of at least one first silicon steel sheet, and/or a first convex part that is convex away from the one end of the inner peripheral part is disposed at the other end of the inner peripheral part of the at least one first silicon steel sheet, and in the radial direction of the stator core, a width of the first concave part and/or a width of the first convex part are/is less than or equal to a width of the inner peripheral part. In each group of first silicon steel sheets, one first silicon steel sheet is clamped to form the ring-shaped structure through a clamping structure such as the first convex part and the first concave part, so that the one first silicon steel sheet is connected end to end to form the ring-shaped structure. This improves connection strength of the one first silicon steel sheet in each group of first silicon steel sheets. In addition, the one first silicon steel sheet is conveniently connected in the clamping manner, to facilitate assembly. In addition, the first convex part and the first concave part are disposed at the inner peripheral part without degrading performance of the motor.

In an implementation, in the circumferential direction of the stator core, in one first silicon steel sheet, a first concave part that is concave towards the other end of the inner peripheral part is disposed at one end of the inner peripheral part, a first convex part that is convex away from the one end of the inner peripheral part is disposed at the other end of the inner peripheral part, and a depth of the first concave part and a length of the first convex part are both less than a length of the inner peripheral part; and each group of first silicon steel sheets includes a plurality of first silicon steel sheets, and the first convex part of the inner peripheral part of each first silicon steel sheet is embedded in the first concave part of the inner peripheral part of an adjacent first silicon steel sheet, so that the plurality of first silicon steel sheets are sequentially connected end to end to form the ring-shaped structure. The first concave part of each first silicon steel sheet accommodates the first convex part of another adjacent first silicon steel sheet, and a manner in which the first convex part and the first concave part are clamped facilitates assembly of the plurality of first silicon steel sheets. In addition, the first convex part and the first concave part are disposed at the inner peripheral part without degrading the performance of the motor.

In an implementation, after the one or more first silicon steel sheets are clamped through the clamping structure such as the first convex part and the first concave part to form the ring-shaped structure, the one or more first silicon steel sheets are cured through welding, injection molding, paint dipping, gluing, or the like, thereby improving structural strength of each group of first silicon steel sheets.

In an implementation, in the radial direction of the stator core, a second convex part that faces the second silicon steel sheet is disposed at the other ends of one or more tooth parts of the at least one first silicon steel sheet, a second concave part that is concave away from the tooth part is disposed on the inner peripheral surface of the second silicon steel sheet, and in the radial direction of the stator core, a thickness of the second convex part and a depth of the second concave part are less than the thickness of the second silicon steel sheet.

In an implementation, in the radial direction of the stator core, a second concave part that is concave away from the second silicon steel sheet is disposed at the other ends of the one or more tooth parts of the at least one first silicon steel sheet, a second convex part that is convex towards the tooth part is disposed on the inner peripheral surface of the second silicon steel sheet, and in the radial direction of the stator core, a thickness of the second convex part and a depth of the second concave part are less than the thickness of the second silicon steel sheet.

The second convex part and the second concave part of the two types of silicon steel sheets of the stator core in the motor provided in this embodiment of this application are embedded, to restrict movement of the first silicon steel sheet relative to the second silicon steel sheet in the circumferential direction, thereby improving structural strength between the plurality of groups of first silicon steel sheets and the plurality of groups of second silicon steel sheets. In addition, the form of the convex part and the concave part facilitates assembly between the plurality of groups of first silicon steel sheets and the plurality of groups of second silicon steel sheets.

In an implementation, each group of second silicon steel sheets includes one or more second silicon steel sheets, and the one or more second silicon steel sheets in each group of second silicon steel sheets are connected end to end to form a ring-shaped structure, to facilitate processing of the plurality of groups of second silicon steel sheets and saving of a raw material.

In an implementation, each group of second silicon steel sheets includes one second silicon steel sheet, and the one second silicon steel sheet is in a ring shape. The one second silicon steel sheet is of an integrated structure, and structural strength of the integrated structure is high.

In an implementation, a material of the first silicon steel sheet is different from a material of the second silicon steel sheet. The first silicon steel sheet and the second silicon steel sheet can be manufactured with different materials based on an actual requirement with impact of factors of various aspects such as manufacturing costs, processing performance of the material, and the performance of the motor comprehensively considered, to obtain the stator core with optimal comprehensive performance. If the stator core is only made of one type of silicon steel sheet material, working condition efficiency of the motor cannot be fully optimized.

In an implementation, the material of the second silicon steel sheet is non-oriented silicon steel, the material of the first silicon steel sheet is oriented silicon steel, and an orientation of the oriented silicon steel is parallel to the radial direction of the stator core. Magnetism of the oriented silicon steel is directional, while magnetism of the non-oriented silicon steel is not directional. Flux generated by the stator winding within a range of the plurality of groups of first silicon steel sheets is directional, and a direction of the flux is in the radial direction of the stator core. In this case, the first silicon steel sheet is manufactured by using the oriented silicon steel, and it is ensured that a magnetic direction of the oriented silicon steel is also in the radial direction of the stator core. A magnetic loss of the motor is reduced, low- and medium-load losses of the motor are lower, and flux density is higher, thereby effectively improving the working condition efficiency of the motor. For the second silicon steel sheet, a direction of flux generated by the stator winding within a range of the plurality of groups of second silicon steel sheets constantly changes, and a difference in impact on the performance of the motor is not significant by manufacturing the second silicon steel sheet by using the oriented silicon steel or the non-oriented silicon steel. In this application, the material of the second silicon steel sheet is the non-oriented silicon steel, which can reduce manufacturing costs.

In an implementation, both the material of the second silicon steel sheet and the material of the first silicon steel sheet can be the oriented silicon steel.

In an implementation, the first silicon steel sheet is formed by winding a straight strip-shaped silicon steel sheet, the straight strip-shaped silicon steel sheet includes a straight strip-shaped bottom, and the plurality of tooth parts that are spaced apart in an extension direction of the bottom, one end of each of the plurality of tooth parts is fastened to a same side of the bottom, the bottom of the straight strip-shaped silicon steel sheet is wound to form the inner peripheral part, and the tooth part is located on an outer side of the inner peripheral part.

In an implementation, the straight strip-shaped silicon steel sheet is obtained by directly processing the silicon steel sheet.

In this application, the silicon steel sheet is first processed into the straight strip-shaped silicon steel sheet, and the straight strip-shaped silicon steel sheet is directly formed into the first silicon steel sheet. Each group of first silicon steel sheets is formed by winding and splicing one or more straight strip-shaped silicon steel sheets. In this forming manner, a ring-shaped architecture with good concentricity can be formed, and distances between two adjacent tooth parts on each group of first silicon steel sheets can be the same, to reduce a manufacturing tolerance. This effectively improves the manufacturing process yield. In addition, when processing the silicon steel sheet to form the straight strip-shaped silicon steel sheet, only linear processing is required, and a processing process is simple. Moreover, the one or more straight strip-shaped silicon steel sheets form the ring-shaped structure after being wound, and the silicon steel sheet or the straight strip-shaped silicon steel sheet do not need to be hollowed out, thus saving the raw material and reducing the manufacturing costs of the stator core.

In an implementation, the second silicon steel sheet is formed by winding the silicon steel sheet, and the second silicon steel sheet is of a cylindrical structure.

In an implementation, the second silicon steel sheet may alternatively be stamped directly from the silicon steel sheet into the cylindrical structure.

According to a second aspect, this application provides a motor. The motor includes a stator core and a rotor. The stator core includes a plurality of groups of first silicon steel sheets and one or more groups of second silicon steel sheets, each group of first silicon steel sheets includes one or more first silicon steel sheets, the one or more first silicon steel sheets in each group of first silicon steel sheets are connected end to end to form a ring-shaped structure, the plurality of groups of first silicon steel sheets are adjacently arranged in an axial direction of the motor, each group of second silicon steel sheets is cylindrical, and the one or more groups of second silicon steel sheets are sleeved on an outer peripheral surface of the plurality of groups of first silicon steel sheets; each first silicon steel sheet includes an inner peripheral part and a plurality of spaced-apart tooth parts, one end of each tooth part is connected to the inner peripheral part, the other end of each tooth part faces an inner peripheral surface of one group of second silicon steel sheets, and in a circumferential direction of the motor, a width of the one end of each tooth part is less than a width of the other end of each tooth part; and inner peripheral parts of the plurality of groups of first silicon steel sheets are sleeved on the rotor and are spaced from an outer peripheral surface of the rotor. The stator core is sleeved on the rotor, and the outer peripheral surface of the rotor and the inner peripheral parts of the plurality of groups of first silicon steel sheets in the stator core are spaced.

In the motor provided in this application, the stator core has good concentricity, the motor can adapt to various types of stator windings, and the motor facilitates assembly of the stator winding.

In an implementation, the tooth parts in the plurality of groups of first silicon steel sheets are sequentially arranged in the axial direction of the motor to form a plurality of rows of tooth parts; and the motor further includes a stator winding, and the stator winding is accommodated in a stator slot between two adjacent rows of tooth parts.

In an implementation, the stator winding is a flat wire winding. The stator winding uses a flat copper wire conductor or a flat Litz wire. Use of the flat wire winding in the motor can improve a slot fill factor of the motor, thereby improving torque density and power density of the motor. In addition, in this application, in the circumferential direction of the stator core, the width of the one end of each tooth part is less than the width of the other end of each tooth part. In this way, assembly of the flat wire winding is facilitated.

In an implementation, the stator winding is a continuous wave winding or a centralized winding. Use of the stator winding with a high forming degree can reduce a quantity of welding points of the stator winding and reduce a welding failure rate.

According to a third aspect, this application provides a manufacturing method of a stator. The manufacturing method of the stator includes:
processing a silicon steel sheet to obtain a straight strip-shaped silicon steel sheet, where the straight strip-shaped silicon steel sheet includes a straight strip-shaped bottom and a plurality of tooth parts, the plurality of tooth parts are spaced in an extension direction of the bottom, and one end of each of the plurality of tooth parts is fastened to a same side of the bottom;
winding the straight strip-shaped silicon steel sheet to form a first silicon steel sheet, where N first silicon steel sheets are sequentially connected end to end to form one group of first silicon steel sheets, the first silicon steel sheet is in a 1/N arc shape, the bottom of the straight strip-shaped silicon steel sheet is wound to form an inner peripheral part, the plurality of tooth parts are fastened to an outer side of the inner peripheral part, and N is a positive integer;
mounting a stator winding into a stator slot from an outer side of a plurality of groups of first silicon steel sheets, where the plurality of groups of first silicon steel sheets are adjacently arranged in an axial direction of the stator, the tooth parts in the plurality of groups of first silicon steel sheets are sequentially arranged in the axial direction of the stator to form a plurality of rows of tooth parts, and the stator slot is formed between two adjacent rows of tooth parts; and
processing the silicon steel sheet to obtain one group of second silicon steel sheets, or winding the silicon steel sheet to obtain a second silicon steel sheet, where N second silicon steel sheets are sequentially connected end to end to form one group of second silicon steel sheets, each second silicon steel sheet is in a 1/N arc shape, and the one group of second silicon steel sheets is in a ring shape; and inserting the plurality of groups of first silicon steel sheets on which the stator winding is mounted into a plurality of groups of second silicon steel sheets in the axial direction of the stator, to form the stator.

In an implementation, when the silicon steel sheet is processed, a plurality of silicon steel sheets are stacked first, and the plurality of silicon steel sheets are processed simultaneously. Straight strip-shaped silicon steel sheets with a similar structure and a smaller error can be obtained by simultaneously processing the plurality of silicon steel sheets.

In an implementation, the mounting a stator winding into a stator slot from an outer side of a plurality of groups of first silicon steel sheets includes: pre-winding the stator winding into a centralized winding, and then mounting the centralized winding into the stator slot from the outer side of the plurality of groups of first silicon steel sheets. Use of the stator winding with a high forming degree can reduce a quantity of welding points of the stator winding and reduce a welding failure rate.

In an implementation, the mounting a stator winding into a stator slot from an outer side of a plurality of groups of first silicon steel sheets includes: forming the stator winding into a continuous wave winding, and then mounting the continuous wave winding into the stator slot from the outer side of the plurality of groups of first silicon steel sheets. Use of the stator winding with the high forming degree can reduce the quantity of welding points of the stator winding and reduce the welding failure rate.

In an implementation, before mounting the stator winding into the stator slot, an open slot insulation paper is inserted into the stator slot or an insulation coating is sprayed into the stator slot to insulate and isolate the stator winding from the stator slot.

In an implementation, after inserting the plurality of groups of first silicon steel sheets on which the stator winding is mounted into the plurality of groups of second silicon steel sheets in the axial direction of the stator, to form the stator, the manufacturing method of the motor further includes: curing the stator, where a curing manner includes at least one of injection molding, paint dipping, and gluing. After the stator is cured, stiffness of the stator can be effectively improved. This improves NVH performance.

In an implementation, after the plurality of groups of first silicon steel sheets are formed, the plurality of groups of first silicon steel sheets are first cured through injection molding, paint dipping, or gluing, and then the stator winding is mounted. The plurality of groups of cured first silicon steel sheets are stable in shape, which facilitates mounting of the stator winding. In addition, it is easy to insert the plurality of groups of cured first silicon steel sheets into the plurality of groups of second silicon steel sheets.

According to a fourth aspect, this application provides a powertrain. The powertrain includes a transmission mechanism and a motor. The motor outputs power through the transmission mechanism. The motor includes the stator core described above or the stator manufactured by the manufacturing method of the stator described above, or the motor is the motor described above.

According to a fifth aspect, this application provides a vehicle. The vehicle includes wheels and the powertrain described above, and the powertrain is configured to drive the wheels.

### BRIEF DESCRIPTION OF DRAWINGS

To describe technical solutions in embodiments of this application more clearly, the following describes accompanying drawings in embodiments of this application.
FIG. 1 is a schematic diagram of a vehicle according to an implementation of this application;
FIG. 2 is a schematic diagram of a powertrain according to an implementation of this application;
FIG. 3 is a sectional view of a motor according to an implementation of this application;
FIG. 4 is a three-dimensional diagram of a stator core according to an implementation of this application;
FIG. 5 is a schematic diagram of one group of first silicon steel sheets according to an implementation of this application;
FIG. 6 is a schematic diagram of one group of second silicon steel sheets according to an implementation of this application;
FIG. 7 is an exploded view of one group of first silicon steel sheets according to an implementation of this application;
FIG. 8 is a partially enlarged diagram of a part P in FIG. 5;
FIG. 9 is a schematic diagram in which two adjacent first silicon steel sheets are connected according to an implementation of this application;
FIG. 10 is a schematic diagram of one group of second silicon steel sheets according to an implementation of this application;
FIG. 11 is a schematic diagram in which a first silicon steel sheet and a second silicon steel sheet are spliced according to an implementation of this application;
FIG. 12 is a schematic diagram of a processing process of a first silicon steel sheet according to an implementation of this application; and
FIG. 13 is a flowchart of a manufacturing method of a stator according to an implementation of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more.

In addition, in this specification, position terms such as "top" and "bottom" are defined relative to positions of structures in the accompanying drawings. It should be understood that these position terms are relative concepts used for relative description and clarification, and may correspondingly change based on changes in the positions of the structures.

For ease of understanding, the following first explains and describes English abbreviations and related technical terms in embodiments of this application.

NVH: is short for noise, vibration, and harshness.

A motor 10 provided in this application may be used in various fields such as aviation, national defense, industrial and agricultural production, and daily life. Specifically, the motor 10 may be used in an industrial driving apparatus, automatic equipment, a fan, a pump, a compressor, a machine tool, a robot, and a means of transportation. The means of transportation may include a land means of transportation, an air means of transportation, a water means of transportation, industrial equipment, agricultural equipment, or entertainment equipment. For example, the water means of transportation may be a hovercraft, a launch, a motorboat, a fishing boat, a cruise ship, a sailboat, a yacht, or the like. The air means of transportation may be an airplane, and the land means of transportation may be a vehicle 1.

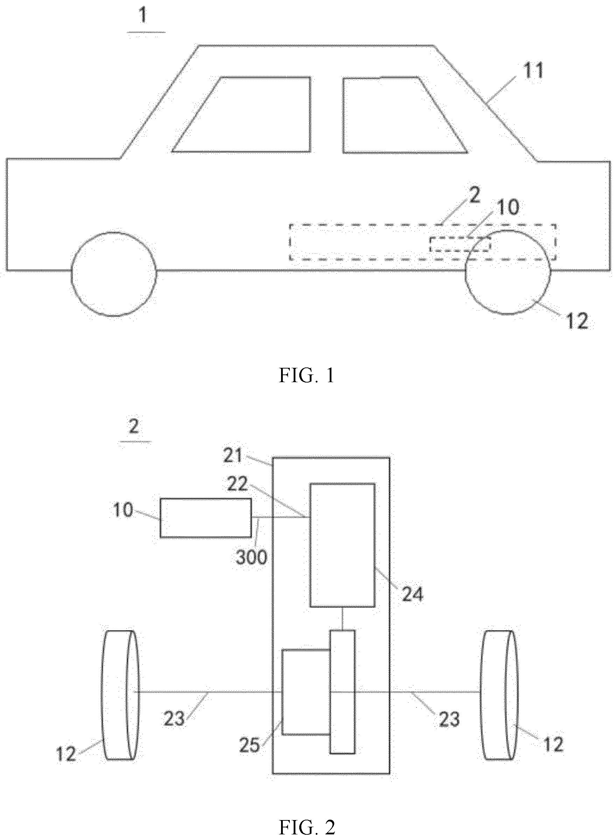

FIG. 1 is a schematic diagram of a vehicle 1 according to an implementation of this application. The vehicle 1 includes a vehicle body 11 and a powertrain 2. The powertrain 2 is mounted on the vehicle body 11, and the powertrain 2 is configured to drive wheels 12. The powertrain 2 includes a motor 10 and a transmission mechanism. The motor 10 outputs power through the transmission mechanism. In this embodiment of this application, the transmission mechanism includes a reducer or a transmission.

The vehicle 1 includes a two-wheeled, three-wheeled, or four-wheeled vehicle. In an implementation, the vehicle 1 is a means of transportation. For example, the vehicle 1 is one of a commercial vehicle, a passenger vehicle, a motorcycle, a flying vehicle, or a train. In an implementation, the vehicle 1 is an industrial vehicle or an engineering vehicle. For example, the vehicle 1 is one of a pallet truck, a trailer, a tractor, an excavator, a bulldozer, or a crane. In an implementation, the vehicle may be an electric vehicle or a fuel vehicle. For example, the vehicle 1 is one of a pure electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), or a new energy vehicle (New Energy Vehicle). In an implementation, the vehicle 1 may alternatively be farm equipment (for example, a mower or a harvester), amusement equipment, a toy vehicle, or the like.

FIG. 2 is a schematic diagram of the powertrain 2 according to an implementation of this application. The powertrain 2 includes a gearbox 21 and the motor 10. The gearbox 21 includes a power input shaft 22. The motor 10 includes a motor shaft 300. The motor shaft 300 is in transmission connection to the power input shaft 22, and the motor shaft 300 is configured to transmit power to the power input shaft 22. The motor shaft 300 of the motor 10 is fastened to the power input shaft 22 of the gearbox 21, and rotation of the motor shaft 300 may drive the power input shaft 22 to rotate, so that the power output by the motor 10 is transmitted to the power input shaft 22. In an implementation, the motor shaft 300 and the power input shaft 22 may be a same shaft.

In an implementation, the gearbox 21 includes a wheel drive half shaft 23, a gear assembly 24, and a differential 25 (as shown in FIG. 2). The wheel drive half shaft 23 is fastened to wheels 12. The gear assembly 24 receives the power transmitted by the power input shaft 22 and transmits the power through the differential 25 to the wheel drive half shaft 23 to drive the wheels 12 to rotate. The gear assembly 24 can change a transmission ratio of the motor 10 to the wheels 12. The gear assembly 24 may be disposed based on a requirement and may be a single-gear deceleration gear assembly, a two-gear deceleration gear assembly, or a multi-gear deceleration gear assembly. The differential 25 can enable left and right (or front and rear) wheels to rotate at different rotational speeds.

In an implementation, the motor 10 and the gearbox 21 may be integrated into a same housing.

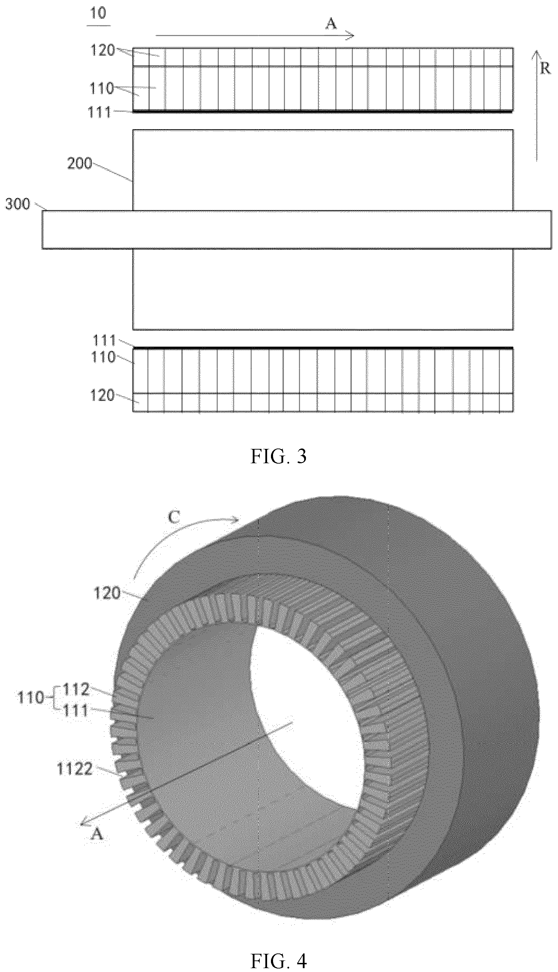

FIG. 3 is a sectional view of the motor 10 according to an implementation of this application. The motor 10 is configured to convert electric energy into mechanical energy. In this embodiment of this application, the motor 10 includes but is not limited to a permanent-magnet synchronous motor, an electric excitation synchronous motor, and an asynchronous motor.

The motor 10 includes a stator 100, a rotor 200, and the motor shaft 300. The stator 100 can generate a rotating magnetic field after a current is supplied. The rotor 200 is sleeved on and fastened to the motor shaft 300 and can rotate relative to the stator 100. There is an air gap between the rotor 200 and the stator 100. When the motor 10 operates, a force applied by the stator 100 to the rotor 200 enables the rotor 200 to rotate relative to the stator 100. When the rotor 200 rotates, the motor shaft 300 can be driven to rotate, and the motor 10 outputs the power through the motor shaft 300.

In an implementation, the stator 100 includes a stator core and a stator winding. The stator core is sleeved on an outer peripheral side of the rotor 200. The stator core can be used for magnetic conduction. A plurality of stator slots 1122 are disposed on the stator core (with reference to FIG. 4). The stator winding is mounted into and fastened to the stator slot 1122 on the stator core. The stator winding is a circuit part of the motor 10. The stator winding is configured to generate a magnetic field of the stator 100.

The following describes in detail the stator core in this application.

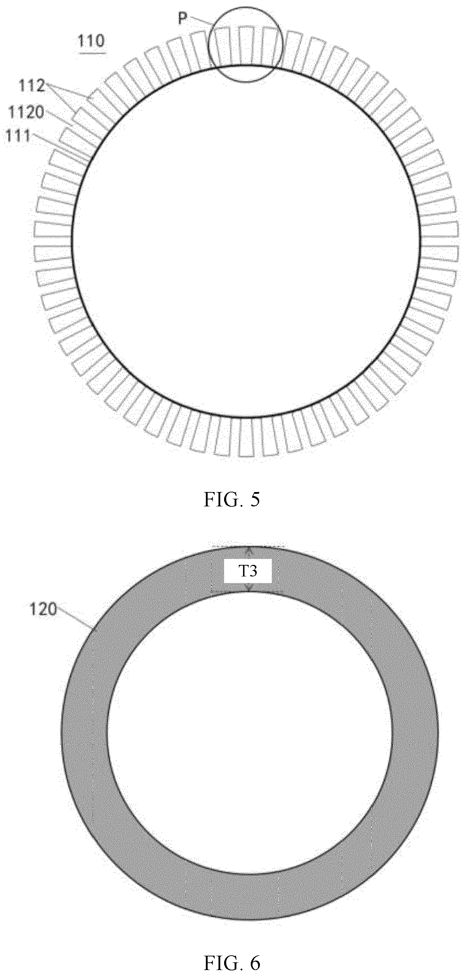

Refer to FIG. 4, FIG. 5, and FIG. 6. FIG. 4 is a three-dimensional diagram of a stator core according to an implementation of this application, FIG. 5 is a schematic diagram of one group of first silicon steel sheets 110 according to an implementation of this application, and FIG. 6 is a schematic diagram of one group of second silicon steel sheets 120 according to an implementation of this application.

This application provides a stator core. The stator core is used in the motor 10. The stator core includes a plurality of groups of first silicon steel sheets 110 and one or more groups of second silicon steel sheets 120. Each group of first silicon steel sheets 110 includes one or more first silicon steel sheets 110. The one or more first silicon steel sheets 110 in each group of first silicon steel sheets 110 are connected end to end to form a ring-shaped structure. The plurality of groups of first silicon steel sheets 110 are adjacently arranged in an axial direction A of the stator core. Each group of second silicon steel sheets 120 is cylindrical, and the one or more groups of second silicon steel sheets 120 are sleeved on outer peripheral surfaces of the plurality of groups of first silicon steel sheets 110. Each first silicon steel sheet 110 includes an inner peripheral part 111 and a plurality of spaced-apart tooth parts 112. One end of each tooth part 112 is connected to the inner peripheral part 111, and the other end of each tooth part 112 faces an inner peripheral surface of one group of second silicon steel sheets 120. In a circumferential direction C of the stator core, a width of the one end of each tooth part 112 is less than a width of the other end of each tooth part 112.

The stator core can be used for the magnetic conduction. The stator core is in a hollow cylindrical shape. A cavity for accommodating the rotor 200 is formed on an inner side of the stator core. The stator core includes the plurality of groups of first silicon steel sheets 110 and the one or more groups of second silicon steel sheets 120. The plurality of groups of first silicon steel sheets 110 and the one or more groups of second silicon steel sheets 120 are stacked in the axial direction A of the stator core, and the stacking assembly design can reduce an eddy current loss of a stator core.

Each group of first silicon steel sheets 110 is of the ring-shaped structure, and the ring-shaped structure is formed by connecting at least one first silicon steel sheet 110 end to end.

In an implementation, each group of first silicon steel sheets 110 includes one first silicon steel sheet 110 (as shown in FIG. 5). The one first silicon steel sheet 110 is enclosed to form the ring-shaped structure. A quantity of first silicon steel sheets 110 included in each group of first silicon steel sheets 110 is small, and process difficulty in forming the ring-shaped structure by enclosing the first silicon steel sheet 110 is small, which facilitates manufacturing of the stator core. In addition, concentricity of the ring-shaped structure formed by enclosing the single first silicon steel sheet 110 is good. In addition, distances between two adjacent tooth parts 112 on each group of first silicon steel sheets 110 can be the same, to reduce a manufacturing tolerance. This effectively improves a manufacturing process yield.

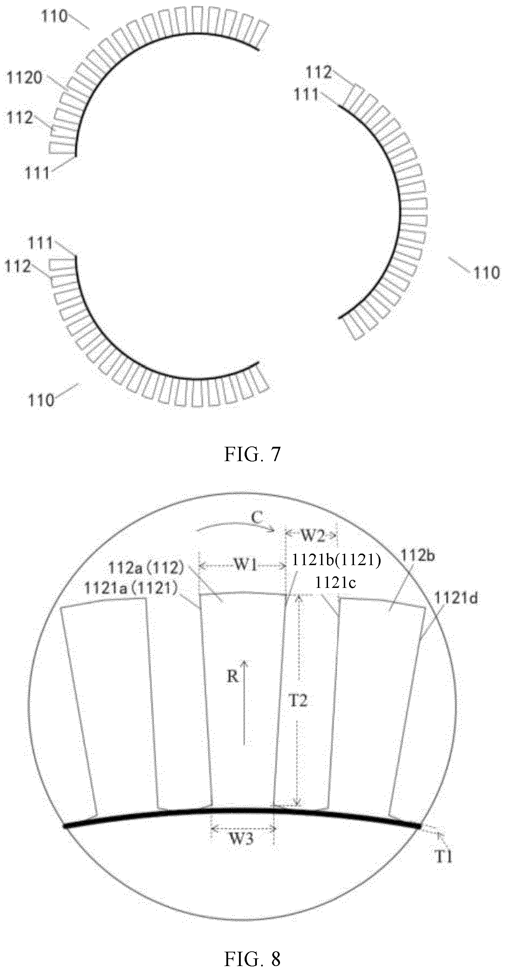

FIG. 7 is an exploded view of one group of first silicon steel sheets 110 according to an implementation of this application. In an implementation, each group of first silicon steel sheets 110 includes the plurality of first silicon steel sheets 110, and the plurality of first silicon steel sheets 110 in an arc shape are connected end to end to form the ring-shaped structure. For example, each group of first silicon steel sheets 110 includes three first silicon steel sheets 110 (as shown in FIG. 7).

In an implementation, in the plurality of groups of first silicon steel sheets 110, quantities of first silicon steel sheets 110 in all groups of first silicon steel sheets 110 are the same. For example, in the plurality of groups of first silicon steel sheets 110, each group of first silicon steel sheets 110 includes one first silicon steel sheet 110. The quantities of first silicon steel sheets 110 in all groups of first silicon steel sheets 110 are the same, which facilitates the manufacturing of the stator core.

In an implementation, in the plurality of groups of first silicon steel sheets 110, quantities of first silicon steel sheets 110 in different groups of first silicon steel sheets 110 are different. For example, in the plurality of groups of first silicon steel sheets 110, one group of first silicon steel sheets 110 includes one first silicon steel sheet 110, and one group of first silicon steel sheets 110 includes three first silicon steel sheets 110.

In this application, each first silicon steel sheet 110 includes the inner peripheral part 111 and the plurality of spaced-apart tooth parts 112 (as shown in FIG. 4 and FIG. 5). The inner peripheral part 111 is in an arc shape or a ring shape. One or more inner peripheral parts 111 in each group of first silicon steel sheets 110 are connected end to end to form the ring shape. One ends of the plurality of tooth parts 112 are fastened to an outer side of the inner peripheral part 111. The outer side of the inner peripheral part 111 is a side that is of the inner peripheral part 111 and that is away from a center of the ring shape. The plurality of tooth parts 112 are convex from the outer side of the inner peripheral part 111 towards the second silicon steel sheet 120 in the radial direction R of the stator core. A gap 1120 is disposed between two adjacent tooth parts 112 in the circumferential direction of the stator core. The inner peripheral part 111 is connected to one ends of the two adjacent tooth parts 112 to enclose one end of the gap 1120. The other ends of the two adjacent tooth parts 112 are spaced to form an opening of the gap 1120 from which the stator winding can be mounted into the gap 1120.

In this application, each first silicon steel sheet 110 includes the plurality of tooth parts 112, and only a small quantity of first silicon steel sheets 110 need to be disposed in each group of first silicon steel sheets 110 to form a large quantity of tooth parts 112. In this way, concentricity of the ring-shaped structure formed by each group of first silicon steel sheets 110 can be ensured. In addition, the distances between adjacent tooth parts 112 can be the same. This effectively improves the manufacturing process yield of the stator core.

If only one tooth part 112 is disposed on each first silicon steel sheet 110, when the plurality of first silicon steel sheets 110 are connected end to end, adjacent tooth parts 112 are easily misplaced, resulting in poor concentricity of the ring-shaped structure formed by connecting the plurality of first silicon steel sheets 110 end to end. In addition, when the stator core requires a larger quantity of tooth parts 112, for example, a total of 54 tooth parts 112 are required for each group of first silicon steel sheets 110, and only one tooth part 112 is disposed on each first silicon steel sheet 110, each group of first silicon steel sheets 110 needs to include 54 first silicon steel sheets 110. This increases difficulty in splicing the first silicon steel sheets 110 in each group of first silicon steel sheets 110 and reduces the manufacturing process yield of the stator core.

However, in this implementation, each first silicon steel sheet 110 includes the plurality of tooth parts 112, so that the concentricity of the ring-shaped structure formed by each group of first silicon steel sheets 110 can be ensured and the manufacturing process yield of the stator core can be effectively improved.

In an implementation, each group of first silicon steel sheets 110 includes a first silicon steel sheet 110, each first silicon steel sheet includes b tooth parts 112, and each group of first silicon steel sheets 110 includes ab tooth parts 112 in total. The ab tooth parts 112 are sequentially arranged at a same distance in the circumferential direction of the stator core. a is a positive integer greater than or equal to 1, b is a positive integer greater than or equal to 2, and b is greater than a.

In an implementation, in each group of first silicon steel sheets 110, a ratio of the quantity of tooth parts 112 to the quantity of first silicon steel sheets 110 is greater than or equal to 4.

In an implementation, each first silicon steel sheet 110 is of an integrated structure. To be specific, the inner peripheral part 111 and the plurality of tooth parts 112 in each first silicon steel sheet 110 are integrally formed. This improves structural strength of the first silicon steel sheet 110 and reduces manufacturing process difficulty of the first silicon steel sheet 110.

In an implementation, the plurality of first silicon steel sheets 110 in the plurality of groups of first silicon steel sheets 110 are a same first silicon steel sheet 110. The first silicon steel sheets 110 in the plurality of groups of first silicon steel sheets 110 have a same structure, shape, size, and quantity of tooth parts 112 included therein, and only one type of first silicon steel sheet 110 needs to be manufactured during the manufacturing of the stator core, which helps reduce a quantity of elements that need to be manufactured in a production process of the stator core. Therefore, the production process of the stator core is simplified and further, production efficiency of the stator core is improved and production costs of the stator core are reduced.

FIG. 8 is a partially enlarged diagram of a part P in FIG. 5. In this application, in the circumferential direction C of the stator core, the width of the one end of each tooth part 112 is less than the width of the other end of each tooth part 112. The first silicon steel sheet 110 is in an arc shape, and the one end of each tooth part 112 is closer to the center of the first silicon steel sheet 110 in the arc shape than the other end of each tooth part 112. The width of the tooth part 112 is a distance between two side walls 1121 of the tooth part 112 in the circumferential direction C. For example, the width of the one end of the tooth part 112 is W3 in FIG. 8, and the width of the other end of the tooth part 112 is W1 in FIG. 8. In this application, W1 is greater than W3.

If the width of the one end of each tooth part 112 is greater than or equal to the width of the other end of each tooth part 112 in the circumferential direction C of the stator core, in a same group of first silicon steel sheets 110, a width between the one end of each tooth part 112 and one end of an adjacent tooth part 112 is less than a width between the other end of each tooth part 112 and the other end of the adjacent tooth part 112. In this case, it is difficult for the two adjacent tooth parts 112 to clamp the stator winding located in the gap 1120 between the two adjacent tooth parts 112, the stator winding cannot be well fastened, and space of the gap 1120 is wasted and it is difficult for the stator core to adapt to various types of stator windings. For example, when the width between the other end of each tooth part 112 and the other end of the adjacent tooth part 112 is greater than the width between the one end of each tooth part 112 and the one end of the adjacent tooth part 112, although the stator core can adapt to a centralized winding, that is, independent wire winding is performed on each tooth part 112, in this way, continuous wave winding cannot be performed. In other words, the stator core cannot adapt to a continuous wave winding.

However, in this application, in the circumferential direction C of the stator core, the width of the one end of each tooth part 112 is less than the width of the other end of each tooth part 112, to increase a distance between the one end of the two adjacent tooth parts 112 in the circumferential direction C of the stator core and decrease a distance between the other end of the two adjacent tooth parts 112 in the circumferential direction C of the stator core. In the circumferential direction C of the stator core, a difference in the distance between the one end of the two adjacent tooth parts 112 and the distance between the other end of the two adjacent tooth parts 112 is small. The stator winding can be better fastened to the gap 1120, so that the stator core can adapt to the various types of stator windings. The stator core provided in this application not only adapts to the centralized winding, but also adapts to the continuous wave winding.

In an implementation, the tooth parts 112 in the plurality of groups of first silicon steel sheets 110 are sequentially arranged in the axial direction A of the stator core to form a plurality of rows of stator tooth parts 112. In the axial direction A of the stator core, the tooth parts 112 in each group of the first silicon steel sheet 110 are arranged in a one-to-one correspondence and overlap, that is, projections of the plurality of stator tooth parts 112 in the axial direction A coincide. The gaps 1120 communicate with each other in the axial direction A to form the stator slot 1122. In other words, the stator slot 1122 is formed between two adjacent rows of stator tooth parts 112. The stator slot 1122 is configured to accommodate the stator winding.

The stator slot 1122 extends through the stator core in the axial direction A, and the stator winding can be mounted into the stator slot 1122 in the axial direction A. Since the gap 1120 has the opening, the stator slot 1122 formed by the gaps 1120 communicating with each other also has an opening, so that the stator winding can be mounted into and fastened to the stator slot 1122 in the radial direction R of the stator core. The opening of the stator slot 1122 faces the second silicon steel sheet 120, so that the stator winding can be mounted into the stator slot 1122 from an outer side of the plurality of groups of first silicon steel sheets 110 in the radial direction R of the stator core.

In an implementation, in the circumferential direction C of the stator core, the width of each tooth part 112 gradually increases from one end close to the inner peripheral part 111 to the other end away from the inner peripheral part 111 (as shown in FIG. 8). In other words, from the one end of the tooth part 112 to the other end of the tooth part 112, the width of the tooth part gradually increases. The width of the tooth part 112 changes uniformly to better clamp the stator winding.

In an implementation, the stator core includes the plurality of groups of second silicon steel sheets 120 and the plurality of groups of second silicon steel sheets 120 are adjacently arranged in the axial direction A of the stator core.

In an implementation, the stator core may also include one group of second silicon steel sheets 120. A length of the one group of second silicon steel sheets 120 in the axial direction A is greater than or equal to a total length of the plurality of groups of first silicon steel sheets 110 in the axial direction A.

In this application, the one or more groups of second silicon steel sheets 120 are sleeved on the outer peripheral surfaces of the plurality of groups of first silicon steel sheets 110 (as shown in FIG. 4 and FIG. 6). The outer peripheral surfaces of the plurality of groups of first silicon steel sheets 110 include end surfaces of the other ends of the plurality of tooth parts 112. Inner peripheral surfaces of the one or more groups of second silicon steel sheets 120 can close the opening of the gap 1120 formed at the other ends of the two adjacent tooth parts 112, so that the gap 1120 forms a closed gap 1120. In addition, the one or more groups of second silicon steel sheets 120 may be used as a structural support component, and the other ends of the plurality of tooth parts 112 in the plurality of groups of first silicon steel sheets 110 may be fastened to the inner peripheral surfaces of the one or more groups of second silicon steel sheets 120, to enhance structural strength of the plurality of groups of first silicon steel sheets 110.

Each group of second silicon steel sheets 120, and each group of first silicon steel sheets 110 are not of the integrated structure. A non-integrated structure can increase a slot fill factor of the motor 10, thereby improving torque density and power density of the motor 10. In an implementation, the plurality of groups of first silicon steel sheets 110 and the plurality of groups of second silicon steel sheets 120 are stacked and assembled into the stator core. In an implementation, after being mounted to the plurality of groups of first silicon steel sheets 110, the stator winding is assembled with the plurality of groups of second silicon steel sheets 120.

In an implementation, each group of second silicon steel sheets 120 includes one or more second silicon steel sheets 120, and the one or more second silicon steel sheets 120 in each group of second silicon steel sheets 120 are connected end to end to form a ring-shaped structure.

Each group of second silicon steel sheets 120 is of the ring-shaped structure, and the ring-shaped structure is formed by connecting at least one second silicon steel sheet 120 end to end. It may be understood that an inner diameter of the ring-shaped structure formed by each group of second silicon steel sheets 120 is greater than or equal to an outer diameter of the ring-shaped structure formed by each group of first silicon steel sheets 110, so that the plurality of groups of second silicon steel sheets 120 can be sleeved on the outer peripheral surfaces of the plurality of groups of first silicon steel sheets 110.

In an implementation, each group of second silicon steel sheets 120 includes one second silicon steel sheet 120. The one second silicon steel sheet 120 is enclosed to form the ring-shaped structure. In an implementation, each group of second silicon steel sheets 120 includes a plurality of second silicon steel sheets 120, and the plurality of second silicon steel sheets 120 in an arc shape are connected end to end to form the ring-shaped structure.

In an implementation, each group of second silicon steel sheets 120 includes the one second silicon steel sheet 120, and the one second silicon steel sheet 120 is in a ring shape. The one second silicon steel sheet 120 is of the integrated structure and is not of the ring-shaped structure formed by the end-to-end connection, and structural strength of the integrated structure is high.

In an implementation, in the plurality of groups of second silicon steel sheets 120, quantities of second silicon steel sheets 120 in all groups of second silicon steel sheets 120 are the same. In an implementation, in the plurality of groups of second silicon steel sheets 120, quantities of second silicon steel sheets 120 in different groups of second silicon steel sheets 120 are different.

In an implementation, in the stator core, a quantity of groups of second silicon steel sheets 120 is less than a quantity of groups of first silicon steel sheets 110. The quantity of groups of second silicon steel sheets 120 is small, a thickness of each group of second silicon steel sheets 120 in the axial direction A of the stator core is large, and overall stiffness of the plurality of groups of second silicon steel sheets 120 is large, to provide better structural support for the plurality of groups of first silicon steel sheets 110 and improve overall structural strength of the stator core.

In an implementation, in the stator core, the quantity of groups of second silicon steel sheets 120 may be greater than or equal to the quantity of groups of first silicon steel sheets 110.

In an implementation, the quantity of second silicon steel sheets 120 in each group of second silicon steel sheets 120 is less than the quantity of first silicon steel sheets 110 in each group of first silicon steel sheets 110. The quantity of second silicon steel sheets 120 in each group of second silicon steel sheets 120 is small, and a quantity of connection parts between the second silicon steel sheets 120 in each group of second silicon steel sheets 120 is small. This improves structural strength of each group of second silicon steel sheets 120 and improves overall stiffness of the stator core.

In an implementation, the quantity of second silicon steel sheets 120 in each group of second silicon steel sheets 120 may be greater than or equal to the quantity of first silicon steel sheets 110 in each group of first silicon steel sheets 110.

In an implementation, the plurality of second silicon steel sheets 120 in the plurality of groups of second silicon steel sheets 120 are a same second silicon steel sheet 120. The second silicon steel sheets 120 in of groups of silicon steel sheets 120 have a same structure, shape, and size, and only one type of second silicon steel sheet 120 needs to be manufactured during the manufacturing of the stator core, which helps reduce the quantity of elements that need to be manufactured in the production process of the stator core. Therefore, the production process of the stator core is simplified and further, the production efficiency of the stator core is improved and the production costs of the stator core are reduced.

In the stator core provided in this application, in a first aspect, each first silicon steel sheet 110 includes the plurality of tooth parts 112, and only the small quantity of first silicon steel sheets 110 need to be disposed in each group of first silicon steel sheets 110 to form the large quantity of tooth parts 112. In this way, the concentricity of the ring-shaped structure formed by each group of first silicon steel sheets 110 can be ensured and the manufacturing process yield of the stator core can be effectively improved.

In a second aspect, in the circumferential direction C of the stator core, the width of the one end of each tooth part 112 is less than the width of the other end of each tooth part 112, so that a width of the gap 1120 at the one end close to the inner peripheral part 111 in the radial direction R of the stator core increases and a width of the gap 1120 at the one end away from the inner peripheral part 111 in the radial direction R of the stator core decreases. A width difference of the gap 1120 at two ends in the radial direction R of the stator core is small. The stator winding can be better fastened to the gap 1120, so that the stator core can adapt to the various types of stator windings.

In a third aspect, the gap 1120 is disposed between the two adjacent tooth parts 112 in each group of first silicon steel sheets 110 and the gap 1120 has the opening, so that the stator core can implement two manners in which the stator winding is mounted in the axial direction A and the radial direction R of the stator core. The stator core can adapt to the plurality of types of stator windings, thereby improving adaptability of the stator core. In addition, the stator core provided in this application has a high slot fill factor. For example, a simple winding, for example, a Hair-pin (Hair-pin) winding or an I-pin winding, may be embedded in the stator slot 1122 in the axial direction. The Hair-pin winding use a semi-formed conductor in a U shape. The I-pin winding uses a linear conductor that is not preformed.

The stator winding with a high forming degree can be assembled into the stator slot 1122 in the radial direction R of the stator core. For example, a fractional slot winding uses a pre-wound and formed coil, and the continuous wave winding uses a conductor that is prefabricated and formed into a continuous wave shape. Fewer welding points are required after the pre-wound and formed coil or the conductor that is prefabricated and formed into the continuous wave shape is pushed into the stator slot 1122 in the radial direction R, thereby reducing a welding failure rate.

According to the stator core provided in this application, after being prefabricated and formed, the stator winding can be assembled into the stator slot 1122 in the radial direction of the stator core and from the opening of the stator slot 1122, thereby reducing a quantity of welding points of the stator winding and reducing the welding failure rate.

According to a fourth aspect, in the stator core provided in this application, the opening of the gap 1120 formed between the two adjacent tooth parts 112 in each group of first silicon steel sheets 110 faces the second silicon steel sheet 120, that is, the opening of the stator slot 1122 faces the plurality of groups of second silicon steel sheets 120, so that the stator winding can be assembled into the stator slot 1122 from the outer side of the plurality of groups of first silicon steel sheets 110 in the radial direction R of the stator core. It may be understood that outer space of the plurality of groups of first silicon steel sheets 110 is larger than inner space of the plurality of groups of first silicon steel sheets 110. In this application, the opening of the stator slot 1122 is located on the outer side of the plurality of groups of first silicon steel sheets 110, to facilitate the assembly of the stator winding.

If the opening of the stator slot 1122 is away from the plurality of groups of second silicon steel sheets 120, the stator winding needs to be mounted from an inner side of the plurality of groups of first silicon steel sheets 110. The stator winding needs to be wound into a small size, placed into the cavity on the inner side of the plurality of groups first silicon steel sheets 110, and then mounted into the stator slot 1122 from the inner side of the plurality of groups of first silicon steel sheets 110. In this way, a deformation amount of the conductor in the stator winding is large, and a paint film of the stator winding is easy to be damaged. In addition, the opening of the stator slot 1122 is located on the inner side of the plurality of groups of first silicon steel sheets 110. This makes NVH performance of the motor 10 poor.

However, in this application, the opening of the stator slot 1122 faces the plurality of groups of second silicon steel sheets 120, so that when the stator winding is assembled into the stator slot 1122 from the outer side of the plurality of groups of first silicon steel sheets 110 in the radial direction R of the stator core, the deformation amount of the stator winding is small. In addition, the stator slot 1122 has a large width, does not deform and squeeze the stator winding, and can effectively prevent the paint film of the stator winding from being damaged. In addition, the inner peripheral part 111 is disposed on the first silicon steel sheet 110, so that no opening is disposed on the inner side of the plurality of groups of first silicon steel sheets 110. This improves the NVH performance of the motor 10.

In an implementation, in the circumferential direction C of the stator core, the two side walls 1121 that are of the two adjacent tooth parts 112 in each group of first silicon steel sheets 110 and that are close to each other are parallel in the radial direction R of the stator core. Each tooth part 112 includes the two side walls 1121 in the circumferential direction C of the stator core. In the implementation shown in FIG. 8, one tooth part 112a in the one group of first silicon steel sheets 110 includes a side wall 1121a and a side wall 1121b that are disposed opposite to each other in the circumferential direction C of the stator core. In the circumferential direction C of the stator core, a tooth part 112b is adjacent to the tooth part 112a. The tooth part 112b includes a side wall 1121c and a side wall 1121d that are disposed opposite to each other in the circumferential direction C of the stator core. The side wall 1121c of the tooth part 112b is closer to the side wall 1121b of the tooth part 112a than the side wall 1121d. The side wall 1121b and the side wall 1121c are the two side walls 1121 that are of the two adjacent tooth parts 112 112a and 112b and that are close to each other. The side wall 1121b and the side wall 1121c are parallel. The side wall 1121b and the side wall 1121c are parallel, so that a distance of the side wall 1121b and the side wall 1121c in the circumferential direction C is all the same.

In this application, the two side walls 1121 that are of the two adjacent tooth parts 112 in each group of first silicon steel sheets 110 and that are close to each other are parallel in the radial direction R of the stator core, so that in the circumferential direction C of the stator core, the distance between each tooth part 112 and an adjacent tooth part 112 from the one end close to the inner peripheral part 111 to the other end away from the inner peripheral part 111 is all the same. In other words, a width of the gap 1120 in the circumferential direction C is a determined value, so that the two side walls 1121 that are of the two adjacent tooth parts 112 and that are close to each other can better clamp and fasten the stator winding.

In an implementation, the tooth parts 112 in the plurality of groups of first silicon steel sheets 110 are sequentially arranged in the axial direction A of the stator core to form a plurality of rows of tooth parts 112 (as shown in FIG. 4), and in the circumferential direction C of the stator core, two side surfaces that are of two adjacent rows of tooth parts 112 and that are close to each other are parallel in the radial direction R of the stator core. Tooth parts 112 in a same position in each group of first silicon steel sheets 110 overlap. The projections of the plurality of tooth parts 112 in the axial direction A coincide. Each row of tooth parts 112 is linear, and the stator slot 1122 formed between the two adjacent rows of tooth parts 112 is also linear and extends in the axial direction A. Tooth parts 112 in each row of tooth parts 112 are sequentially arranged along the side wall 1121 of the circumferential direction C in the axial direction A to form a side surface of each row of tooth parts 112.

In this application, the two side surfaces that are of the two adjacent rows of tooth parts 112 and that are close to each other are parallel in the radial direction R of the stator core, so that a distance between each row of tooth parts 112 and an adjacent row of tooth parts 112 from the one end close to the inner peripheral part 111 to the other end away from the inner peripheral part 111 is all the same. In other words, a width of the stator slot 1122 in the circumferential direction C is a determined value, so that the two side surfaces that are of the two adjacent rows of tooth parts 112 and that are close to each other can better clamp and fasten the stator winding.

In an implementation, in the radial direction R of the stator core, a ratio of a thickness of the inner peripheral part 111 to a thickness of the tooth part 112 is greater than or equal to 0.02 and less than or equal to 0.08. The thickness of the inner peripheral part 111 is a distance between two surfaces of the inner peripheral part 111 in the radial direction R of the stator core. For example, the thickness of the inner peripheral part 111 is T1 in FIG. 8. The thickness of the tooth part 112 is a distance between two end surfaces of the tooth part 112 in the radial direction R, and the thickness of the tooth part 112 is also a distance between an end surface that is of the tooth part 112 and that is away from the inner peripheral part 111 in the radial direction R and the inner peripheral part 111. For example, the thickness of the tooth part 112 is T2 in FIG. 8.

The thickness of the tooth part 112 in the radial direction R determines a length of the gap 1120, and the length of the gap 1120 in the radial direction R is also a length of the stator slot 1122 in the radial direction R. A size of the stator slot 1122 is closely related to performance of the motor 10 and may be specifically set based on a requirement.

The thickness of the inner peripheral part 111 is related to a distance between the stator slot 1122 and the rotor 200. A larger thickness of the inner peripheral part 111 indicates a longer distance between the stator slot 1122 and the rotor 200 in the radial direction R. If the thickness of the inner peripheral part 111 is large or small, the motor 10 can operate normally, but if the thickness of the inner peripheral part 111 is large, the distance between the stator slot 1122 and the rotor 200 in the radial direction R is large. If a distance between the stator winding in the stator slot 1122 and the rotor 200 is too large, a magnetic resistance of the motor 10 may increase, and work efficiency of the motor 10 may be affected. If the thickness of the inner peripheral part 111 is small, the inner peripheral part 111 is thin, and the NVH performance of the motor 10 is easily damaged during use of the motor 10.

In this implementation, the ratio of the thickness of the inner peripheral part 111 to the thickness of the tooth part 112 is set to be within a range of 0.02 to 0.08, and the stator slot 1122 between the two adjacent rows of tooth parts 112 is provided with sufficient space for smooth assembly of the stator winding. In addition, the ratio of the thickness of the inner peripheral part 111 to the thickness of the tooth part 112 is moderate, a distance between the stator winding and the stator 100 is not too large, and the magnetic resistance of the motor 10 is small, thereby improving a performance index of the motor 10. In addition, the inner peripheral part 111 has high strength to improve the NVH performance of the motor.

In an implementation, in the radial direction R of the stator core, the ratio of the thickness of the inner peripheral part 111 to the thickness of the tooth part 112 is greater than or equal to 0.03 and less than or equal to 0.08. For example, in the radial direction R of the stator core, the ratio of the thickness of the inner peripheral part 111 to the thickness of the tooth part 112 may be 0.02, 0.025, 0.03, 0.035, 0.04, 0.045, 0.05, 0.055, 0.06, 0.065, 0.07, 0.075 or 0.08. In an implementation, in the radial direction R of the stator core, the thickness of the inner peripheral part 111 is greater than or equal to 0.3 mm and less than or equal to 1 mm. In an implementation, in the radial direction R of the stator core, the thickness of the tooth part 112 is greater than or equal to 0.3 mm and less than or equal to 1 mm.

In an implementation, in the radial direction R of the stator core, a ratio of a thickness of the second silicon steel sheet 120 to the thickness of the tooth part 112 is greater than or equal to 1.2 and less than or equal to 1.7. The thickness of the second silicon steel sheet 120 is a distance between two surfaces of the second silicon steel sheet 120 in the radial direction R of the stator core. For example, the thickness of the second silicon steel sheet 120 is T3 in FIG. 6.

If the ratio of the thickness of the second silicon steel sheet 120 to the thickness of the tooth part 112 is too small, the thickness of the second silicon steel sheet 120 is small, so that the overall strength of the stator core is low. If the ratio of the thickness of the second silicon steel sheet 120 to the thickness of the tooth part 112 is too large, the thickness of the second silicon steel sheet 120 is large, which increases a weight of the stator core and reduces the performance of the motor 10. In addition, when the thickness of the second silicon steel sheet 120 exceeds a specific value, continuing to increase the thickness of the second silicon steel sheet 120 does not greatly affect the stiffness of the stator core.

However, in this application, the ratio of the thickness of the second silicon steel sheet 120 to the thickness of the tooth part 112 is set within a range of 1.2 to 1.7, so that not only can the overall strength of the stator core be improved, but also the weight of the stator core is not increased too much, thereby improving the performance index of the motor 10. For example, in the radial direction R of the stator core, the ratio of the thickness of the second silicon steel sheet 120 to the thickness of the tooth part 112 may be 1.2, 1.25, 1.3, 1.35, 1.4, 1.15, 1.5, 1.55, 1.6, 1.65 or 1.7. In an implementation, in the radial direction R of the stator core, the thickness of the second silicon steel sheet 120 is greater than or equal to 19 mm and less than or equal to 22 mm.

In an implementation, there is the gap 1120 between the two adjacent tooth parts 112 in each group of first silicon steel sheets 110, and in the circumferential direction C of the stator core, a ratio of a maximum width of the tooth part 112 to a width of the gap 1120 is greater than or equal to 1.1 and less than or equal to 1.8. The width of the tooth part 112 is the distance between the two side walls 1121 of the tooth part 112 in the circumferential direction C. Since the width of the one end of the tooth part 112 is smaller than the width of the other end of the tooth part 112, the maximum width of the tooth part 112 is the width of the other end of the tooth part 112, and the other end of the tooth part 112 is the end that is of the tooth part 112 and that is away from the inner peripheral part 111 in the radial direction R. For example, the maximum width of the tooth part 112 is W1 in FIG. 8. The width of the gap 1120 is a distance between two side walls 1121 that are of the two adjacent tooth parts 112 and that are close to each other in the circumferential direction C. For example, the width of the gap 1120 is W2 in FIG. 8.

In each group of first silicon steel sheets 110, if the width of the tooth part 112 is increased, the width of the gap 1120 is reduced. If the width of the tooth part 112 is large and the width of the gap 1120 is small, structural strength of the tooth part 112 is high, so that the overall strength of the stator core is improved. However, the stator slot 1122 formed by the gap 1120 is too small, which affects the assembly of the stator winding. If the width of the tooth part 112 is small and the width of the gap 1120 is large, sufficient assembly space of the stator winding can be ensured, but if the width of the tooth part 112 is too small, the strength of the stator core is affected.

In this application, the ratio of the maximum width of the tooth part 112 to the width of the gap 1120 is greater than or equal to 1.1 and less than or equal to 1.8. Not only can high structural strength of the tooth part 112 be ensured to improve the overall structural strength of the stator core, but also mounting of the stator winding can be facilitated. For example, in the circumferential direction C of the stator core, the ratio of the maximum width of the tooth part 112 to the width of the gap 1120 may be 1.1, 1.15, 1.2, 1.25, 1.3, 1.35, 1.4, 1.45, 1.5, 1.55, 1.6, 1.65, 1.7, 1.75 or 1.8.

In an implementation, in the circumferential direction C of the stator core, the maximum width of the tooth part 112 is greater than or equal to 4.8 mm and less than or equal to 6.4 mm. In an implementation, in the circumferential direction C of the stator core, the width of the gap 1120 is greater than or equal to 3.7 mm and less than or equal to 4.2 mm. In an implementation, in the circumferential direction C of the stator core, the maximum width of the tooth part 112 is greater than or equal to 3.8 mm and less than or equal to 4.5 mm.

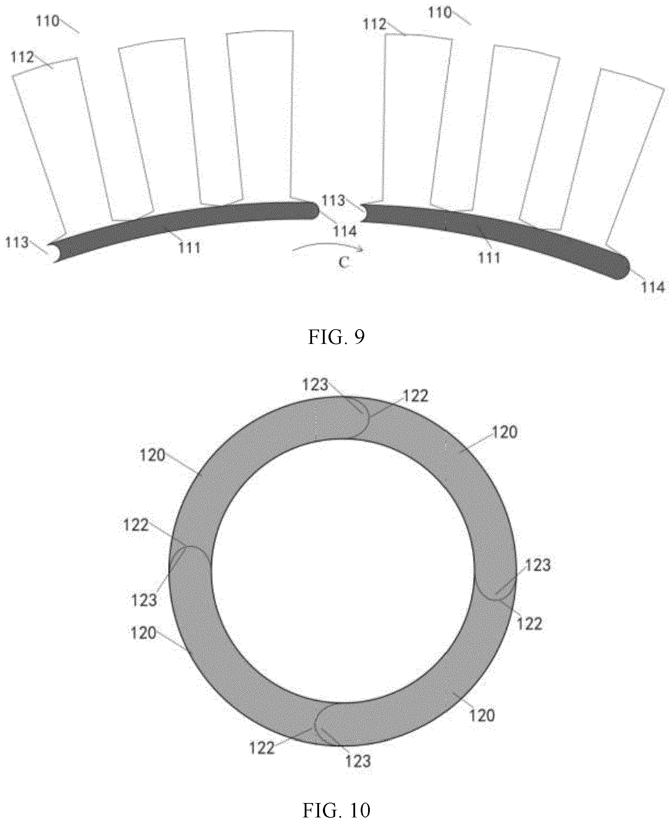

FIG. 9 is a schematic diagram in which two adjacent first silicon steel sheets 110 are connected according to an implementation of this application. In an implementation, a first concave part 113 is disposed at one end of two ends of the first silicon steel sheet 110, and a first convex part 114 is disposed at the other end of the two ends of the first silicon steel sheet 110. The first convex part 114 is clamped in the first concave part 113, so that the one or more first silicon steel sheets 110 in each group of first silicon steel sheets 110 are sequentially connected end to end to form the ring-shaped structure.

The first concave part 113 is concave from the one end of the two ends of the first silicon steel sheet 110 towards the other end of the two ends of the first silicon steel sheet 110 in the circumferential direction C. The first convex part 114 is convex from the other end of the two ends of the first silicon steel sheet 110 towards a direction away from the one end of the two ends of the first silicon steel sheet 110 in the circumferential direction C. In each group of first silicon steel sheets 110, the one or more first silicon steel sheets 110 are clamped to form the ring-shaped structure through a clamping structure such as the first convex part 114 and the first concave part 113. This improves connection strength of the one or more first silicon steel sheets 110 in each group of first silicon steel sheets 110. In addition, the one or more first silicon steel sheets 110 are conveniently connected in the clamping manner, to facilitate assembly.

In an implementation, each group of first silicon steel sheets 110 includes one first silicon steel sheet 110, and the first convex part 114 of the one first silicon steel sheet 110 is embedded in the first concave part 113, so that the one first silicon steel sheet 110 is connected end to end to form the ring-shaped structure. The first convex part 114 and the first concave part 113 are respectively disposed on two ends of the one first silicon steel sheet 110 in the circumferential direction C, and the first convex part 114 of the first silicon steel sheet 110 is embedded in the first concave part 113 of the first silicon steel sheet 110, so that the two ends of the first silicon steel sheet 110 are clamped to form one group of first silicon steel sheets 110 in the ring shape. The manner in which the first convex part 114 and the first concave part 113 are clamped facilitates assembly of the first silicon steel sheet 110.

In an implementation, each group of first silicon steel sheets 110 includes a plurality of first silicon steel sheets 110, and the first convex part 114 of each first silicon steel sheet 110 is embedded in the first concave part 113 of an adjacent first silicon steel sheet 110, so that the plurality of first silicon steel sheets 110 are sequentially connected end to end to form the ring-shaped structure. The first concave part 113 of each first silicon steel sheet 110 accommodates the first convex part 114 of another adjacent first silicon steel sheet 110, and the manner in which the first convex part 114 and the first concave part 113 are clamped facilitates assembly of the plurality of first silicon steel sheets 110.

In an implementation, the first convex part 114 and the first concave part 113 are disposed at the inner peripheral part 111 (as shown in FIG. 9). The inner peripheral part 111 includes a first end and a second end in the circumferential direction C. The first convex part 114 and the first concave part 113 are respectively disposed at the first end and the second end, and the first convex part 114 is convex away from the second end from the first end and the first concave part 113 is concave from the second end towards the first end. A depth of the first concave part 113 in the circumferential direction C is smaller than a length of the inner peripheral part 111 in the circumferential direction C. In each group of first silicon steel sheets 110, the one or more inner peripheral parts 111 are clamped through the first convex part 114 and the first concave part 113, so that the one or more first silicon steel sheets 110 are sequentially connected end to end to form the ring-shaped structure. In an implementation, a width of the first concave part 113 and a width of the first convex part 114 in the radial direction of the stator core are less than or equal to a width of the inner peripheral part 111 of the first silicon steel sheet 110.

In an implementation, in the circumferential direction C of the stator core, a length of the first convex part 114 is equal to a length of the first concave part 113. The first convex part 114 can just be clamped in the first concave part 113, and utilization of the first convex part 114 and the first concave part 113 is large, which cannot only facilitate the assembly of each group of first silicon steel sheets 111, but also can improve a stable connection between the first silicon steel sheets 111 in each group of first silicon steel sheets 111.

In an implementation, in the circumferential direction C of the stator core, the length of the first convex part 114 is less than the length of the first concave part 113. After the first convex part 114 is inserted into the first concave part 113, a part of the first concave part 113 is not filled by the first convex part 114. In this case, the first concave part 113 may be filled through potting, welding, or the like, to improve connection strength of the first convex part 114 and the first concave part 113.

In an implementation, the first concave part 113 and the first convex part 114 are both semicircular, to facilitate clamping.

In an implementation, shapes of the first concave part 113 and the first convex part 114 may alternatively be a prism or another irregular shape, to improve reliability of clamping the first concave part 113 and the first convex part 114 is improved.

In an implementation, the first convex part 114 and the first concave part 113 are disposed at the tooth part 112. Two tooth parts 112 at two ends of each first silicon steel sheet 110 in the circumferential direction C are set as a half tooth part 112, and when the first silicon steel sheet 110 is connected end to end with the adjacent first silicon steel sheet 110, at a connection part, two half tooth parts 112 are clamped to form a complete tooth part 112. This implementation can also be implemented, but may cause damage to integrity of the tooth part 112, affect a magnetic circuit, and degrade the performance of the motor 10.

In an implementation, after the one or more first silicon steel sheets 110 are clamped through the clamping structure such as the first convex part 114 and the first concave part 113 to form the ring-shaped structure, the one or more first silicon steel sheets 110 are cured through welding, injection molding, paint dipping, gluing, or the like, thereby improving structural strength of each group of first silicon steel sheets 110.

FIG. 10 is a schematic diagram of the one group of second silicon steel sheets 120 according to an implementation of this application. In an implementation, a third concave part 122 is disposed at one end of two ends of the second silicon steel sheet 120, and a third convex part 123 is disposed at the other end of the two ends of the second silicon steel sheet 120. The third convex part 123 is clamped in the third concave part 122, so that the one or more second silicon steel sheets 120 in each group of second silicon steel sheets 120 are sequentially connected end to end to form the ring-shaped structure.

In each group of second silicon steel sheets 120, the one or more second silicon steel sheets 120 are clamped to form the ring-shaped structure through a clamping structure such as the third convex part 123 and the third concave part 122. This improves connection strength of the one or more second silicon steel sheets 120 in each group of second silicon steel sheets 120. In addition, the one or more second silicon steel sheets 120 are conveniently connected in the clamping manner, to facilitate assembly.

In an implementation, each group of second silicon steel sheets 120 includes one second silicon steel sheet 120, and the third convex part 123 of the one second silicon steel sheet 120 is embedded in the third concave part 122, so that the one second silicon steel sheet 120 is connected end to end to form the ring-shaped structure. The third convex part 123 and the third concave part 122 are respectively disposed on two ends of the one second silicon steel sheet 120 in the circumferential direction C, and the third convex part 123 of the second silicon steel sheet 120 is embedded in the third concave part 122 of the second silicon steel sheet 120, so that the two ends of the second silicon steel sheet 120 are clamped to form one group of second silicon steel sheets 120 in the ring shape. The manner in which the third convex part 123 and the third concave part 122 are clamped facilitates assembly of the second silicon steel sheet 120.

In an implementation, each group of second silicon steel sheets 120 includes a plurality of second silicon steel sheets 120 (as shown in FIG. 10), and the third convex part 123 of each second silicon steel sheet 120 is embedded in the third concave part 122 of an adjacent second silicon steel sheet 120, so that the plurality of second silicon steel sheets 120 are connected end to end to form the ring-shaped structure. The third concave part 122 of each second silicon steel sheet 120 accommodates the third convex part 123 of another adjacent second silicon steel sheet 120, and the manner in which the third convex part 123 and the third concave part 122 are clamped facilitates the assembly of the second silicon steel sheet 120.

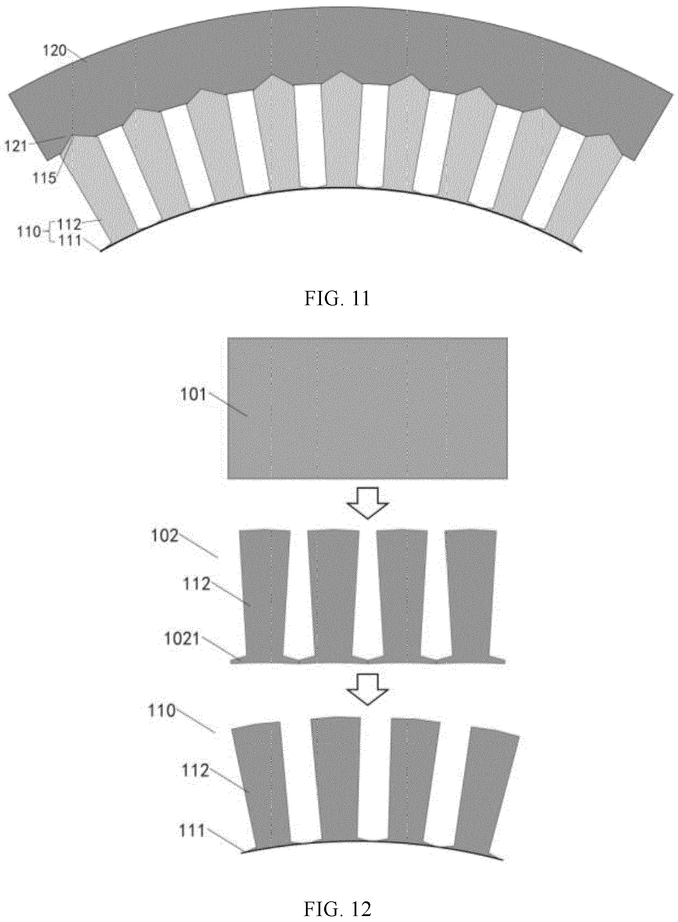

FIG. 11 is a schematic diagram in which the first silicon steel sheet 110 and the second silicon steel sheet 120 are spliced according to an implementation of this application. In an implementation, a second concave part 121 is disposed at/on one of the other ends of at least some of the tooth parts 112 and the inner peripheral surface of the second silicon steel sheet 120, and a second convex part 115 is disposed at/on the other of the other ends of the at least some of the tooth parts 112 and the inner peripheral surface of the second silicon steel sheet 120. The second convex part 115 is embedded in the second concave part 121.

The other end of the tooth part 112 is an end that is of the tooth part 112 and that is close to the second silicon steel sheet 120 in the radial direction R of the stator core. The at least some of the tooth parts 112 are clamped with the second silicon steel sheet 120 through the structure of the second convex part 115 and the second concave part 121, to restrict movement of the first silicon steel sheet 110 relative to the second silicon steel sheet 120 in the circumferential direction C. This enhances stability of the plurality of groups of first silicon steel sheets 110 and the plurality of groups of second silicon steel sheets 120 and facilitates assembly of the plurality of groups of first silicon steel sheets 110 and the plurality of groups of second silicon steel sheets 120 in a form of the convex part and the concave part.

In an implementation, the second convex part 115 (as shown in FIG. 11) is disposed at the other ends of the at least some of the tooth parts 112, and the second concave part 121 is disposed on the inner peripheral surface of the second silicon steel sheet 120. The second convex part 115 is convex from the other end of the tooth part 112 towards the second silicon steel sheet 120 in the radial direction R of the stator core. The second concave part 121 is concave from the inner peripheral surface of the second silicon steel sheet 120 towards a direction away from the tooth part 112 in the radial direction R. In an implementation, a quantity of second convex part 115 is equal to a quantity of second concave part 121.

A depth of the second concave part 121 in the radial direction R is less than a depth of the second silicon steel sheet 120 in the radial direction R, and the second concave part 121 does not penetrate the second silicon steel sheet 120. The depth of the second concave part 121 in the radial direction R and a thickness of the second convex part 115 in the radial direction R are smaller than the thickness of the tooth part 112 in the radial direction R, and a shape of the second convex part 115 is small, so that the second convex part 115 can be better clamped with the second concave part 121 and a change amount to the tooth part 112 is not large, to facilitate processing.

The second convex part 115 of the at least some of the tooth parts 112 is embedded in the second concave part 121 of the second silicon steel sheet 120, to restrict the movement of the first silicon steel sheet 110 relative to the second silicon steel sheet 120 in the circumferential direction C, thereby improving structural strength between the plurality of groups of first silicon steel sheets 110 and the plurality of groups of second silicon steel sheets 120.

In an implementation, shapes of the second concave part 121 and the second convex part 115 are a prism. For example, the shapes of the second concave part 121 and the second convex part 115 are a triangle, to improve stability of clamping the second concave part 121 and the second convex part 115.

In an implementation, the shapes of the second concave part 121 and the second convex part 115 may alternatively be an arc or another shape.

In an implementation, the second convex part 115 is disposed at the other ends of all tooth parts 112, to further enhance the stability of the plurality of groups of first silicon steel sheets 110 and the plurality of groups of second silicon steel sheets 120.

In an implementation, the second convex part 115 is disposed at the other ends of some tooth parts 112, and the other ends of other tooth parts 112 are in an arc shape, and a center of the arc shape faces the inner peripheral part 111. The second convex part 115 is disposed at the other ends of the some tooth parts 112, which facilitates clamping of the second convex part 115 in the second concave part 121 of the second silicon steel sheet 120, to improve the structural strength of the stator core. The other ends of the other tooth parts 112 are in the arc shape, which facilitates adhering of the other ends of the other tooth parts 112 to the inner peripheral surface of the second silicon steel sheet 120 and reduces a gap between the other ends of the other tooth parts 112 and the inner peripheral surface of the second silicon steel sheet 120, thereby improving the stability between the first silicon steel sheet 110 and the second silicon steel sheet 120 and improving the NVH performance of the motor 10.

In an implementation, the second concave part 121 is disposed at the other ends of the at least some of the tooth parts 112, and the second convex part 115 is disposed on the inner peripheral surface of the second silicon steel sheet 120. The second convex part 115 is convex from the inner peripheral surface of the second silicon steel sheet 120 towards a direction of the tooth part 112 in the radial direction R. The second concave part 121 is concave from the other end of the tooth part 112 towards a direction of the inner peripheral part 111 in the radial direction R.

The depth of the second concave part 121 in the radial direction R is less than a depth of the tooth part 112 in the radial direction R and the second concave part 121 does not penetrate the tooth part 112. Therefore, a structural change amount to the tooth part 112 is small and impact of the second concave part 121 on the tooth part 112 is reduced. The depth of the second concave part 121 in the radial direction R and the thickness of the second convex part 115 in the radial direction R are smaller than a thickness of the second silicon steel sheet 120 in the radial direction R and the shape of the second convex part 115 is small, so that the second convex part 115 can be better clamped with the second concave part 121 and a change amount to the second silicon steel sheet 120 is not large, to facilitate processing.

The second concave part 121 of the at least some of the tooth parts 112 accommodates the second convex part 115 of the second silicon steel sheet 120, to restrict the movement of the first silicon steel sheet 110 relative to the second silicon steel sheet 120 in the circumferential direction C, thereby improving structural strength between the plurality of groups of first silicon steel sheets 110 and the plurality of groups of second silicon steel sheets 120.

In an implementation, the second concave part 121 is disposed at the other ends of all tooth parts 112, to further enhance the stability of the plurality of groups of first silicon steel sheets 110 and the plurality of groups of second silicon steel sheets 120.

In an implementation, the second concave part 121 is disposed at the other ends of the some tooth parts 112, and the other ends of the other tooth parts 112 are in the arc shape, and the center of the arc shape faces the inner peripheral part 111. The second concave part 121 is disposed at the other ends of the some tooth parts 112, which facilitates clamping of the second concave part 121 in the second convex part 115 of the second silicon steel sheet 120, to improve the structural strength of the stator core. The other ends of the other tooth parts 112 are in the arc shape, which facilitates adhering of the other ends of the other tooth parts 112 to the inner peripheral surface of the second silicon steel sheet 120 and reduces a gap between the other ends of the other tooth parts 112 and the inner peripheral surface of the second silicon steel sheet 120, thereby improving the stability between the first silicon steel sheet 110 and the second silicon steel sheet 120 and improving the NVH performance of the motor 10.

In an implementation, a material of the first silicon steel sheet 110 is selected from at least one of oriented silicon steel or non-oriented silicon steel.

In an implementation, a material of the second silicon steel sheet 120 is selected from at least one of the oriented silicon steel or the non-oriented silicon steel.

In an implementation, the material of the first silicon steel sheet 110 is different from the material of the second silicon steel sheet 120. The first silicon steel sheet and the second silicon steel sheet can be manufactured with different materials based on an actual requirement with impact of factors of various aspects such as manufacturing costs, processing performance of the material, and the performance of the motor 10 comprehensively considered, to obtain the stator core with optimal comprehensive performance. If the stator core is only made of one type of silicon steel sheet material, working condition efficiency of the motor 10 cannot be fully optimized.

In an implementation, the material of the second silicon steel sheet 120 is the non-oriented silicon steel, the material of the first silicon steel sheet 110 is the oriented silicon steel, and an orientation of the oriented silicon steel is parallel to the radial direction R of the stator core. Magnetism of the oriented silicon steel is directional, while magnetism of the non-oriented silicon steel is not directional.

Flux generated by the stator winding within a range of the plurality of groups of first silicon steel sheets 110 is directional, and a direction of the flux is in the radial direction R of the stator core. In this case, the first silicon steel sheet 110 is manufactured by using the oriented silicon steel, and it is ensured that a magnetic direction of the oriented silicon steel is also in the radial direction R of the stator core. A magnetic loss of the motor 10 is reduced, low- and medium-load losses of the motor 10 are lower, and flux density is higher, thereby effectively improving the working condition efficiency of the motor 10.

For the second silicon steel sheet 120, a direction of flux generated by the stator winding within a range of the plurality of groups of second silicon steel sheets 120 constantly changes, and a difference in impact on the performance of the motor 10 is not significant by manufacturing the second silicon steel sheet 120 by using the oriented silicon steel or the non-oriented silicon steel. In this application, the material of the second silicon steel sheet 120 is the non-oriented silicon steel, which can reduce manufacturing costs.

In an implementation, both the material of the second silicon steel sheet 120 and the material of the first silicon steel sheet 110 can be the oriented silicon steel.

FIG. 12 is a schematic diagram of a processing process of the first silicon steel sheet 110 according to an implementation of this application. In an implementation, the first silicon steel sheet 110 is formed by winding a straight strip-shaped silicon steel sheet 102, the straight strip-shaped silicon steel sheet 102 includes a straight strip-shaped bottom 1021, and the plurality of tooth parts 112 that are spaced in an extension direction of the bottom 1021, the one end of each of the plurality of tooth parts 112 is fastened to a same side of the bottom 1021, the bottom 1021 of the straight strip-shaped silicon steel sheet 102 is wound to form the inner peripheral part 111, and the tooth part 112 is located on the outer side of the inner peripheral part 111. The straight strip-shaped silicon steel sheet 102 is the first silicon steel sheet 110 whose two ends are straightened, or the first silicon steel sheet 110 is the straight strip-shaped silicon steel sheet 102 after rolling.

In an implementation, the straight strip-shaped silicon steel sheet 102 is obtained by directly processing the silicon steel sheet 101 (as shown in FIG. 12).

In this application, the silicon steel sheet 101 is first processed into the straight strip-shaped silicon steel sheet 102, and the straight strip-shaped silicon steel sheet 102 is directly formed into the first silicon steel sheet 110 (as shown in FIG. 12). Each group of first silicon steel sheets 110 is formed by winding and splicing one or more straight strip-shaped silicon steel sheets 102. In this forming manner, a ring-shaped architecture with good concentricity can be formed, and the distances between the two adjacent tooth parts 112 on each group of first silicon steel sheets 110 can be the same, to reduce the manufacturing tolerance. This effectively improves the manufacturing process yield.

In some implementations, the silicon steel sheet 101 is directly processed to form one group of first silicon steel sheets 110 in the ring shape. When the silicon steel sheet 101 is processed to obtain the tooth part 112, encircling processing is required and a processing process is complex. In addition, when the silicon steel sheet 101 in a sheet shape is processed into the ring shape, the middle of the silicon steel sheet 101 needs to be hollowed out. This loses a large amount of the silicon steel sheet 101, utilization of the silicon steel sheet 101 is low, and manufacturing costs of the stator core are increased.

However, in this implementation, the silicon steel sheet 101 is first processed into the straight strip-shaped silicon steel sheet 102 (as shown in FIG. 12), and the straight strip-shaped silicon steel sheet 102 is wound and formed into the first silicon steel sheet 110. First, when processing the silicon steel sheet 101 to form the straight strip-shaped silicon steel sheet 102, only linear processing is required, and a processing process is simple. Moreover, the one or more straight strip-shaped silicon steel sheets 102 form the ring-shaped structure after being wound, and the silicon steel sheet 101 or the straight strip-shaped silicon steel sheet 102 do not need to be hollowed out, thus saving a raw material and reducing the manufacturing costs of the stator core.

In an implementation, after the one or more straight strip-shaped silicon steel sheets 102 are wound to form one group of first silicon steel sheets 110, a plurality of groups of first silicon steel sheets 110 are stacked.

In an implementation, the plurality of groups of first silicon steel sheets 110 are formed by winding a stacked sheet of the straight strip-shaped silicon steel sheet 102. First, the plurality of straight strip-shaped silicon steel sheets 102 are stacked to form the stacked sheet, and the stacked sheet is wound into the plurality of groups of first silicon steel sheets 110.

In an implementation, the second silicon steel sheet 120 is formed by winding the silicon steel sheet 101, and the second silicon steel sheet 120 is of a cylindrical structure.

In an implementation, the second silicon steel sheet 120 may alternatively be stamped directly from the silicon steel sheet 101 into the cylindrical structure.

Refer to FIG. 3, FIG. 4, and FIG. 5. This application further provides a motor 10. The motor 10 includes a stator core and a rotor 200. The stator core includes a plurality of groups of first silicon steel sheets 110 and one or more groups of second silicon steel sheets 120. Each group of first silicon steel sheets 110 includes one or more first silicon steel sheets 110. The one or more first silicon steel sheets 110 in each group of first silicon steel sheets 110 are connected end to end to form a ring-shaped structure. The plurality of groups of first silicon steel sheets 110 are adjacently arranged in an axial direction A of the stator core. Each group of second silicon steel sheets 120 is cylindrical, the one or more groups of second silicon steel sheets 120 are sleeved on outer peripheral surfaces of the plurality of groups of first silicon steel sheets 110, each group of second silicon steel sheets 120 includes one or more second silicon steel sheets 120, the one or more second silicon steel sheets 120 in each group of second silicon steel sheets 120 are connected end to end to form a ring-shaped structure, and the plurality of groups of second silicon steel sheets 120 are adjacently arranged in the axial direction A of the stator core. Each first silicon steel sheet 110 includes an inner peripheral part 111 and a plurality of spaced-apart tooth parts 112, one end of each tooth part 112 is connected to the inner peripheral part 111, the other end of each tooth part 112 faces an inner peripheral surface of one group of second silicon steel sheets 120, and in a circumferential direction C of the stator core, a width of the one end of each tooth part 112 is less than a width of the other end of each tooth part 112. An outer peripheral surface of the rotor 200 and the inner peripheral parts 111 of the plurality of groups of first silicon steel sheets 110 of the stator core are spaced.

One or more inner peripheral parts 111 in each group of first silicon steel sheets 110 are enclosed to form a ring shape. The plurality of groups of first silicon steel sheets 110 are stacked in the axial direction A, so that the plurality of inner peripheral parts 111 form a cylindrical shape. The rotor 200 is located in a cavity disposed inside the cylindrical inner peripheral part 111. The rotor 200 is not in contact with the inner peripheral part 111, and there is an air gap between an outer surface of the rotor 200 and inner surfaces of the plurality of inner peripheral parts 111, so that the rotor 200 can rotate relative to the inner peripheral part 111.

In the motor 10 provided in this application, each first silicon steel sheet 110 of the stator core in the motor 10 includes the plurality of tooth parts 112, and only a small quantity of first silicon steel sheets 110 need to be disposed in each group of first silicon steel sheets 110 to form a large quantity of tooth parts 112. In this way, concentricity of the ring-shaped structure formed by each group of first silicon steel sheets 110 can be ensured and a manufacturing process yield of the stator core can be effectively improved.

In addition, in the circumferential direction C of the stator core, the width of the one end of each tooth part 112 is less than the width of the other end of each tooth part 112, so that a width of a gap 1120 at one end close to the inner peripheral part 111 in the radial direction R of the stator core increases and a width of the gap 1120 at one end away from the inner peripheral part 111 in the radial direction R of the stator core decreases. A width difference of the gap 1120 at two ends in the radial direction R of the stator core is small. A stator winding can be better fastened to the gap 1120, so that the motor 10 can adapt to various types of stator windings.

In addition, the gap 1120 is disposed between two adjacent tooth parts 112 in each group of first silicon steel sheets 110 and the gap 1120 has an opening, so that the stator core can implement two manners in which the stator winding is mounted in the axial direction A and the radial direction R of the stator core. The motor 10 can adapt to a plurality of types of stator windings, thereby improving adaptability of the motor 10. In addition, the opening of the gap 1120 faces the second silicon steel sheet 120 and the stator winding can be assembled into a stator slot 1122 from an outer side of the plurality of groups of first silicon steel sheets 110 in the radial direction R of the stator core. Outer space of the plurality of groups of first silicon steel sheets 110 is larger than inner space of the plurality of groups of first silicon steel sheets 110, which facilitates assembly of the stator winding and improves assembly convenience of the motor 10.

In an implementation, the tooth parts 112 in the plurality of groups of first silicon steel sheets 110 are sequentially arranged in the axial direction A of the motor 10 to form a plurality of rows of tooth parts 112. Tooth parts 112 in a same position in each group of first silicon steel sheets 110 overlap. The stator slot 1122 extending in the axial direction A is formed between two adjacent rows of tooth parts 112 (as shown in FIG. 4) and may be configured to accommodate the stator winding.

In an implementation, the motor 10 further includes the stator winding, and the stator winding is accommodated in the slot between the two adjacent rows of tooth parts 112. The stator winding is a circuit part of the motor 10. The stator winding is configured to generate a magnetic field of a stator 100. The magnetic field generated by the stator winding may cause the rotor 200 to rotate.

For example, the motor 10 is a permanent-magnet synchronous motor, and when the rotor 200 is used in the permanent-magnet synchronous motor, the rotor 200 may generate a constant magnetic field and may rotate under the action of a rotating magnetic field generated by the stator winding based on a principle that same magnetic poles repel each other and opposite magnetic poles attract each other. The motor 10 is an asynchronous induction motor, and when the rotor 200 is used in the asynchronous induction motor, the rotor may rotate by obtaining an electromagnetic torque under the action of the rotating magnetic field generated by the stator winding based on an electromagnetic induction (Electromagnetic induction) phenomenon.

In an implementation, two side surfaces that are of the two adjacent rows of tooth parts 112 and that are close to each other are parallel in the radial direction R of the stator core, so that the two side surfaces that are of the two adjacent rows of tooth parts 112 and that are close to each other can better clamp and fasten the stator winding.

In an implementation, the stator winding is a flat wire winding. The stator winding uses a flat wire conductor. For example, the flat wire conductor may be a flat copper wire conductor. Use of the flat wire winding in the motor 10 can improve a slot fill factor of the motor 10, thereby improving torque density and power density of the motor 10. In addition, in this application, in the circumferential direction C of the stator core, the width of the one end of each tooth part 112 is less than the width of the other end of each tooth part 112. In this way, assembly of the flat wire winding is facilitated.

In an implementation, the stator winding may alternatively be a Litz wire winding.

In an implementation, the stator winding is a continuous wave winding or a centralized winding. Use of the stator winding with a high forming degree can reduce a quantity of welding points of the stator winding and reduce a welding failure rate.

In the foregoing embodiments, the descriptions of the composition, the structure, and the connection relationship of the plurality of groups of first silicon steel sheets 110, the plurality of groups of second silicon steel sheets 120, each first silicon steel sheet 110, and each second silicon steel sheet 120 in the stator core and variant solutions may be applicable to the composition, the structure, and the connection relationship of the plurality of groups of first silicon steel sheets 110, the plurality of groups of second silicon steel sheets 120, each first silicon steel sheet 110, and each second silicon steel sheet 120 in the motor 10 in this embodiment. Details are not described herein.

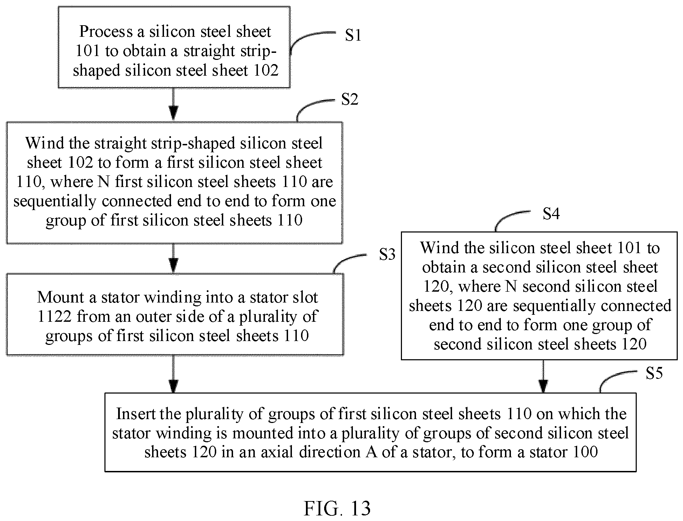

FIG. 13 is a flowchart of a manufacturing method of the stator 100 according to an implementation of this application. This application further provides a manufacturing method of the stator 100. The manufacturing method of the stator 100 includes steps S1 to S5, and specific steps are as follows:

Step S1: Process a silicon steel sheet 101 to obtain a straight strip-shaped silicon steel sheet 102, where the straight strip-shaped silicon steel sheet 102 includes a straight strip-shaped bottom 1021 and a plurality of tooth parts 112, the plurality of tooth parts 112 are spaced in an extension direction of the bottom 1021, and one end of each of the plurality of tooth parts 112 is fastened to a same side of the bottom 1021.

Step S2: Wind the straight strip-shaped silicon steel sheet 102 to form a first silicon steel sheet 110, where N first silicon steel sheets 110 are sequentially connected end to end to form one group of first silicon steel sheets 110, the first silicon steel sheet 110 is in a 1/N arc shape, the bottom 1021 of the straight strip-shaped silicon steel sheet 102 is wound to form an inner peripheral part 111, the plurality of tooth parts 112 are fastened to an outer side of the inner peripheral part 111, and N is a positive integer.

Step S3: Mount a stator winding into a stator slot 1122 from an outer side of a plurality of groups of first silicon steel sheets 110, where the plurality of groups of first silicon steel sheets 110 are adjacently arranged in an axial direction A of the stator 100, the tooth parts 112 in the plurality of groups of first silicon steel sheets 110 are sequentially arranged in the axial direction A of the stator 100 to form a plurality of rows of tooth parts 112, and the stator slot 1122 is formed between two adjacent rows of tooth parts 112.

Step S4: Wind the silicon steel sheet 101 to obtain a second silicon steel sheet 120, where N second silicon steel sheets 120 are sequentially connected end to end to form one group of second silicon steel sheets 120, and each second silicon steel sheet 120 is in a 1/N arc shape.

Step S5: Insert the plurality of groups of first silicon steel sheets 110 on which the stator winding is mounted into a plurality of groups of second silicon steel sheets 120 in the axial direction A of the stator, to form the stator 100.

It should be noted that the stator 100 provided in this application is not manufactured strictly according to the sequence of steps S1, S2, S3, S4, and S5, and some steps may be performed earlier or later. For example, step S4 may be performed before S1, S2, or S3. In addition, the manufacturing steps in this application may include more or fewer manufacturing steps.

In this embodiment, the silicon steel sheet 101 is first processed into the straight strip-shaped silicon steel sheet 102 (as shown in FIG. 12). Processing methods include but are not limited to stamping, cutting, and the like. For example, the silicon steel sheet 101 is stamped, a part of the sheet material is removed in a stamping area to form a gap 1120, and a remaining part forms the bottom 1021 and the plurality of tooth parts 112. The gap 1120 between two adjacent tooth parts 112 has an opening, and the opening of the gap 1120 is away from the bottom 1021.

Next, the straight strip-shaped silicon steel sheet 102 is wound to form the first silicon steel sheet 110. Each group of first silicon steel sheets 110 is formed by winding and splicing one or more straight strip-shaped silicon steel sheets 102. In this forming manner, a ring-shaped architecture with good concentricity can be formed, and distances between the two adjacent tooth parts 112 on each group of first silicon steel sheets 110 can be the same, to reduce a manufacturing tolerance. This effectively improves a manufacturing process yield.

The stator winding is then mounted in the stator slots 1122 of the plurality of first silicon steel sheets 110. The stator winding can be mounted into the stator slot 1122 from the outer side of the plurality of groups of first silicon steel sheets 110 in the radial direction R of the stator core. Outer space of the plurality of groups of first silicon steel sheets 110 is large, which facilitates assembly of the stator winding. In addition, the stator winding can be prefabricated and formed before being assembled. Use of the stator winding with a high forming degree can reduce a quantity of welding points of the stator winding and reduce a welding failure rate.

Similarly, for the plurality of groups of second silicon steel sheets 120, in an implementation, the silicon steel sheet 101 is first wound to form the second silicon steel sheet 120. Each group of second silicon steel sheets 120 is formed by enclosing one or more second silicon steel sheets 120. One or more groups of second silicon steel sheets in a ring shape are formed in a winding manner, which can reduce waste of the silicon steel sheet 101, improve utilization of the silicon steel sheet 101, and reduce manufacturing costs of the stator core.

In some implementations, the silicon steel sheet 101 may alternatively be processed to directly obtain one group of second silicon steel sheets 120. The silicon steel sheet 101 is directly stamped into the second silicon steel sheet 120 in the ring shape without being wound, and this processing manner is convenient.

Moreover, since the plurality of second silicon steel sheets 120 and the plurality of first silicon steel sheets 110 are processed separately, the silicon steel sheet 101 used for processing the second silicon steel sheet 120 may be different from the silicon steel sheet 101 used for processing the first silicon steel sheet 110. For example, the silicon steel sheet 101 used for processing the second silicon steel sheet 120 is non-oriented silicon steel, and the silicon steel sheet 101 used for processing the first silicon steel sheet 110 is oriented silicon steel. In this application, materials of the first silicon steel sheet 110 and the second silicon steel sheet 120 are separately set, to better improve working efficiency of the motor 10.

Finally, the plurality of groups of first silicon steel sheets 110 on which the stator winding is mounted are inserted into the plurality of groups of second silicon steel sheets 120 in the axial direction A of the stator, to form the stator 100. A whole process is simple, and the formed stator 100 has good comprehensive performance.

In an implementation, when the silicon steel sheet 101 is processed, a plurality of silicon steel sheets 101 are stacked first, and the plurality of silicon steel sheets 101 are processed simultaneously. Straight strip-shaped silicon steel sheets 102 with a similar structure and a smaller error can be obtained by simultaneously processing the plurality of silicon steel sheets 101. In an implementation, the plurality of silicon steel sheets 101 are processed to form a plurality of straight strip-shaped silicon steel sheets 102 stacked in the axial direction A, and a stacked sheet of the straight strip-shaped silicon steel sheets 102 is simultaneously wound, to form the plurality of groups of first silicon steel sheets 110 stacked in the axial direction A.

In an implementation, the silicon steel sheets 101 may be processed one by one. After the one or more straight strip-shaped silicon steel sheets 102 are wound to form one group of first silicon steel sheets 110, the plurality of groups of first silicon steel sheets 110 are stacked.

In an implementation, mounting the stator winding into the stator slot 1122 from the outer side of the plurality of groups of first silicon steel sheets 110 includes: pre-winding the stator winding into a centralized winding, and then mounting the centralized winding into the stator slot 1122 from the outer side of the plurality of groups of first silicon steel sheets 110. Use of the stator winding with the high forming degree can reduce the quantity of welding points of the stator winding and reduce the welding failure rate.

In an implementation, the stator winding is formed into a continuous wave winding, and then the continuous wave winding is mounted into the stator slot 1122 from the outer side of the plurality of groups of first silicon steel sheets 110. Use of the stator winding with the high forming degree can reduce the quantity of welding points of the stator winding and reduce the welding failure rate.

In an implementation, before the stator winding is mounted into the stator slot 1122, an open slot insulation paper is inserted into the stator slot 1122 or an insulation coating is sprayed into the stator slot 1122 to insulate and isolate the stator winding from the stator slot 1122.

In an implementation, after the plurality of groups of first silicon steel sheets 110 on which the stator winding is mounted are inserted into the plurality of groups of second silicon steel sheets 120 in the axial direction A of the stator 100, to form the stator 100, the manufacturing method of the motor 10 further includes: curing the stator 100, where a curing manner includes at least one of injection molding, paint dipping, and gluing. After the stator 100 is cured, stiffness of the stator 100 can be effectively improved. This improves NVH performance.

In an implementation, after the plurality of groups of first silicon steel sheets 110 are formed, the plurality of groups of first silicon steel sheets 110 are first cured through injection molding, paint dipping, or gluing, and then the stator winding is mounted. The plurality of groups of cured first silicon steel sheets 110 are stable in shape, which facilitates mounting of the stator winding. In addition, it is easy to insert the plurality of groups of cured first silicon steel sheets 110 into the plurality of groups of second silicon steel sheets 120.

In an implementation, after the plurality of groups of second silicon steel sheets 120 are formed, the plurality of groups of second silicon steel sheets 120 may be first cured through injection molding, paint dipping, or gluing and then assembled with the plurality of groups of first silicon steel sheets 110.

In an implementation, the plurality of groups of first silicon steel sheets 110 and the plurality of groups of second silicon steel sheets 120 are separately cured, the stator winding is mounted, and the plurality of groups of first silicon steel sheets 110 and the plurality of groups of second silicon steel sheets 120 are cured after being assembled. This improves the stiffness of the stator 100.

Refer to FIG. 2. This application provides a powertrain 2. The powertrain 2 includes a gearbox 21 and a motor 10. The motor 10 includes the stator core described above or the stator 100 manufactured by the manufacturing method of the stator 100 described above. The motor 10 further includes a rotor 200 and a motor shaft 300. The rotor 200 is sleeved on the motor shaft 300 of the motor 10, and an inner peripheral part 111 is sleeved on the rotor 200. The gearbox 21 includes a power input shaft 22, and the motor shaft 300 is in transmission connection to the power input shaft 22 and is configured to transmit power to the power input shaft 22.

Refer to FIG. 1. This application provides a vehicle 1. The vehicle 1 includes a vehicle body 11 and the powertrain 2 described above, and the powertrain 2 is mounted on the vehicle body 11.

## Claims

1. A stator core for a motor (10), wherein the stator core comprises a plurality of groups of first silicon steel sheets (110) and one or more groups of second silicon steel sheets (120), each group of first silicon steel sheets (110) comprises a plurality of first silicon steel sheets (110), the plurality of first silicon steel sheets (110) in each group of first silicon steel sheets (110) are connected end to end to form a ring-shaped structure, the plurality of groups of first silicon steel sheets (110) are adjacently arranged in an axial direction of the stator core, each group of second silicon steel sheets (120) is cylindrical, and the one or more groups of second silicon steel sheets (120) are sleeved on outer peripheral surfaces of the plurality of groups of first silicon steel sheets (110); and
each first silicon steel sheet comprises an inner peripheral part (111) and a plurality of spaced-apart tooth parts (112), one end of each tooth part (112) is connected to the inner peripheral part (111), the other end of each tooth part (112) faces an inner peripheral surface of one group of second silicon steel sheets (120), and in a circumferential direction (C) of the stator core, a width of the one end of each tooth part is less than a width of the other end of each tooth part;
**characterized in that** each group of second silicon steel sheets (120) comprises a plurality of second silicon steel sheets (120), and the plurality of second silicon steel sheets (120) in each group of second silicon steel sheets (120) are connected end to end to form a ring-shaped structure through a clamping structure; and
wherein the quantity of second silicon steel sheets (120) in each group of second silicon steel sheets (120) is less than the quantity of first silicon steel sheets (110) in each group of first silicon steel sheets (110).

2. The stator core for a motor (10) according to claim 1, wherein the clamping structure includes a third convex part (123) and a third concave part (122).

3. The stator core for a motor (10) according to claim 1 or 2, wherein in the circumferential direction (C) of the stator core, two side walls that are of two adjacent tooth parts (112) in each group of first silicon steel sheets (110) and that are close to each other are parallel in a radial direction of the stator core.

4. The stator core for a motor (10) according to claim 1 to 3, wherein the tooth parts (112) in the plurality of groups of first silicon steel sheets (110) are sequentially arranged in the axial direction of the stator core to form a plurality of rows of tooth parts (112); and
in the circumferential direction (C) of the stator core, two side surfaces that are of two adjacent rows of tooth parts (112) and that are close to each other are parallel in the radial direction of the stator core.

5. The stator core for a motor (10) according to any one of claims 1 to 4, wherein in the radial direction of the
stator core, a ratio of a thickness of the inner peripheral part to a thickness of the tooth part is greater than or equal to 0.02 and less than or equal to 0.08; and/or
in the radial direction of the stator core, a ratio of a thickness of the second silicon steel sheet to the thickness of the tooth part is greater than or equal to 1.2 and less than or equal to 1.7; and/or
there is a gap between the two adjacent tooth parts (112) in each group of first silicon steel sheets (110), and in the circumferential direction of the stator core, a ratio of a maximum width of the tooth part to a width of the gap is greater than or equal to 1.1 and less than or equal to 1.8.

6. The stator core for a motor (10) according to any one of claims 1 to 5, wherein in the circumferential direction
of the stator core, a first concave part (113) that is concave towards the other end of the inner peripheral part (111) is disposed at one end of the inner peripheral part (111) of at least one first silicon steel sheet, a first convex part (114) that is convex away from the one end of the inner peripheral part (111) is disposed at the other end of the inner peripheral part (111) of the at least one first silicon steel sheet, and in the radial direction of the stator core, a width of the first concave part (113) and a width of the first convex part (114) are less than or equal to a width of the inner peripheral part (111).

7. The stator core for a motor (10) according to any one of claims 1 to 6, wherein in the radial direction of the stator core, a second convex part (115) that faces the second silicon steel sheet is disposed at the other ends of one or more tooth parts (112) of the at least one first silicon steel sheet, a second concave part (121) that is concave away from the tooth part is disposed on the inner peripheral surface of the second silicon steel sheet, and in the radial direction of the stator core, a thickness of the second convex part (115) and a depth of the second concave part (121) are less than the thickness of the second silicon steel sheet; and/or
in the radial direction of the stator core, a second concave part (121) that is concave away from the second silicon steel sheet is disposed at the other ends of the one or more tooth parts (112) of the at least one first silicon steel sheet, a second convex part (115) that is convex towards the tooth part is disposed on the inner peripheral surface of the second silicon steel sheet, and in the radial direction of the stator core, a thickness of the second convex part (115) and a depth of the second concave part (121) are less than the thickness of the second silicon steel sheet.

8. The stator core for a motor (10) according to any one of claims 1 to 7, wherein a material of the first silicon steel sheet is different from a material of the second silicon steel sheet; and/or
the material of the second silicon steel sheet is non-oriented silicon steel, the material of the first silicon steel sheet is oriented silicon steel, and an orientation of the oriented silicon steel is parallel to the radial direction of the stator core.

9. The stator core for a motor (10) according to any one of claims 1 to 8, wherein the first silicon steel sheet is formed by winding a straight strip-shaped silicon steel sheet (102), the straight strip-shaped silicon steel sheet (102) comprises a straight strip-shaped bottom, and the plurality of tooth parts (112) that are spaced apart in an extension direction of the bottom, one end of each of the plurality of tooth parts (112) is fastened to a same side of the bottom, the bottom of the straight strip-shaped silicon steel sheet (102) is wound to form the inner peripheral part (111), and the tooth part is located on an outer side of the inner peripheral part (111).

10. A motor (10), wherein the motor (10) comprises a rotor and the stator core according to any one of claims 1 to 9, the stator core is sleeved on the rotor, and an outer peripheral surface of the rotor and inner peripheral parts of a plurality of groups of first silicon steel sheets (110) in the stator core are spaced.

11. The motor (10) according to claim 10, wherein tooth parts (112) in the plurality of groups of first silicon steel sheets (110) are sequentially arranged in an axial direction of the motor (10) to form a plurality of rows of tooth parts (112); and
the motor (10) further comprises a stator winding, the stator winding is accommodated in a stator slot (1122) between two adjacent rows of tooth parts (112), and the stator winding is a flat wire winding.

12. A manufacturing method of a stator (100), wherein the manufacturing method of the stator comprises:
processing (S1) a silicon steel sheet (101) to obtain a straight strip-shaped silicon steel sheet (102), wherein the straight strip-shaped silicon steel sheet (102) comprises a straight strip-shaped bottom and a plurality of tooth parts (112), the plurality of tooth parts (112) are spaced in an extension direction of the bottom, and one end of each of the plurality of tooth parts (112) is fastened to a same side of the bottom;
winding (S2) the straight strip-shaped silicon steel sheet (102) to form a first silicon steel sheet, wherein N first silicon steel sheets (110) are sequentially connected end to end to form one group of first silicon steel sheets (110), the first silicon steel sheet is in a 1/N arc shape, the bottom of the straight strip-shaped silicon steel sheet (102) is wound to form an inner peripheral part (111), the plurality of tooth parts (112) are fastened to an outer side of the inner peripheral part (111), and N is a positive integer larger than one;
mounting (S3) a stator winding into a stator slot (1122) from an outer side of a plurality of groups of first silicon steel sheets (110), wherein the plurality of groups of first silicon steel sheets (110) are adjacently arranged in an axial direction of the stator, tooth parts (112) in the plurality of groups of first silicon steel sheets (110) are sequentially arranged in the axial direction of the stator to form a plurality of rows of tooth parts (112), and the stator slot (1122) is formed between two adjacent rows of tooth parts (112); and
processing the silicon steel sheet to obtain one group of second silicon steel sheets (120), or winding the silicon steel sheet to obtain a second silicon steel sheet, wherein N second silicon steel sheets (120) are sequentially connected end to end to form one group of second silicon steel sheets (120), each second silicon steel sheet is in a 1/N arc shape, and the one group of second silicon steel sheets (120) is in a ring shape; and inserting the plurality of groups of first silicon steel sheets (110) on which the stator winding is mounted into a plurality of groups of second silicon steel sheets (120) in the axial direction of the stator, to form the stator.

13. The manufacturing method of the stator according to claim 12, wherein the mounting a stator winding into a stator slot (1122) from an outer side of a plurality of groups of first silicon steel sheets (110) comprises:
pre-winding the stator winding into a centralized winding, and then mounting the centralized winding into the stator slot (1122) from the outer side of the plurality of groups of first silicon steel sheets (110); or
forming the stator winding into a continuous wave winding, and then mounting the continuous wave winding into the stator slot (1122) from the outer side of the plurality of groups of first silicon steel sheets (110).

14. A powertrain (2), wherein the powertrain (2) comprises a transmission mechanism and a motor (10), and the motor (10) outputs power through the transmission mechanism;
the motor (10) comprises the stator core according to any one of claims 1 to 9; or
the motor (10) comprises the stator manufactured by the manufacturing method of the stator according to claim 12 or 13; or
the motor (10) is the motor (10) according to claim 10 or 11.

15. A vehicle (1), wherein the vehicle (1) comprises wheels and the powertrain (2) according to claim 14, and the powertrain (2) is configured to drive the wheels.

## Patentansprüche

1. Statorkern für einen Motor (10), wobei der Statorkern eine Vielzahl von Gruppen von ersten Siliziumstahlblechen (110) und eine oder mehrere Gruppen von zweiten Siliziumstahlblechen (120) umfasst, jede Gruppe von ersten Siliziumstahlblechen (110) eine Vielzahl von ersten Siliziumstahlblechen (110) umfasst, die Vielzahl von ersten Siliziumstahlblechen (110) in jeder Gruppe von ersten Siliziumstahlblechen (110) Ende an Ende verbunden sind, um eine ringförmige Struktur zu bilden, die Vielzahl von Gruppen von ersten Siliziumstahlblechen (110) benachbart in einer axialen Richtung des Statorkerns angeordnet sind, jede Gruppe von zweiten Siliziumstahlblechen (120) zylindrisch ist, und die eine oder die mehreren Gruppen von zweiten Siliziumstahlblechen (120) auf äußeren Umfangsoberflächen der Vielzahl von Gruppen von ersten Siliziumstahlblechen (110) aufgeschoben sind; und
jedes erste Siliziumstahlblech einen inneren Umfangsteil (111) und eine Vielzahl von beabstandeten Zahnteilen (112) umfasst, ein Ende jedes Zahnteils (112) mit dem inneren Umfangsteil (111) verbunden ist, das andere Ende jedes Zahnteils (112) einer inneren Umfangsoberfläche einer Gruppe von zweiten Siliziumstahlblechen (120) zugewandt ist und in einer Umfangsrichtung (C) des Statorkerns eine Breite des einen Endes jedes Zahnteils kleiner als eine Breite des anderen Endes jedes Zahnteils ist;
**dadurch gekennzeichnet, dass** jede Gruppe von zweiten Siliziumstahlblechen (120) eine Vielzahl von zweiten Siliziumstahlblechen (120) umfasst, und die Vielzahl von zweiten Siliziumstahlblechen (120) in jeder Gruppe von zweiten Siliziumstahlblechen (120) Ende an Ende verbunden sind, um durch eine Klemmstruktur eine ringförmige Struktur zu bilden; und
wobei die Anzahl der zweiten Siliziumstahlbleche (120) in jeder Gruppe von zweiten Siliziumstahlblechen (120) kleiner als die Anzahl der ersten Siliziumstahlbleche (110) in jeder Gruppe von ersten Siliziumstahlblechen (110) ist.

2. Statorkern für einen Motor (10) nach Anspruch 1, wobei die Klemmstruktur einen dritten konvexen Teil (123) und einen dritten konkaven Teil (122) einschließt.

3. Statorkern für einen Motor (10) nach Anspruch 1 oder 2, wobei in der Umfangsrichtung (C) des Statorkerns zwei Seitenwände, die zu zwei benachbarten Zahnteilen (112) in jeder Gruppe von ersten Siliziumstahlblechen (110) gehören und die nahe beieinander liegen, in einer radialen Richtung des Statorkerns parallel sind.

4. Statorkern für einen Motor (10) nach Anspruch 1 bis 3, wobei die Zahnteile (112) in der Vielzahl von Gruppen von ersten Siliziumstahlblechen (110) sequenziell in der axialen Richtung des Statorkerns angeordnet sind, um eine Vielzahl von Reihen von Zahnteilen (112) zu bilden; und
in der Umfangsrichtung (C) des Statorkerns zwei Seitenoberflächen, die zu zwei benachbarten Reihen von Zahnteilen (112) gehören und die nahe beieinander liegen, in der radialen Richtung des Statorkerns parallel sind.

5. Statorkern für einen Motor (10) nach einem der Ansprüche 1 bis 4, wobei in der radialen Richtung des Statorkerns ein Verhältnis einer Dicke des inneren Umfangsteils zu einer Dicke des Zahnteils größer als oder gleich 0,02 und kleiner als oder gleich 0,08 ist; und/oder
in der radialen Richtung des Statorkerns ein Verhältnis einer Dicke des zweiten Siliziumstahlblechs zu der Dicke des Zahnteils größer als oder gleich 1,2 und kleiner als oder gleich 1,7 ist; und/oder
es einen Spalt zwischen den zwei benachbarten Zahnteilen (112) in jeder Gruppe von ersten Siliziumstahlblechen (110) gibt, und in der Umfangsrichtung des Statorkerns ein Verhältnis einer maximalen Breite des Zahnteils zu einer Breite des Spalts größer als oder gleich 1,1 und kleiner als oder gleich 1,8 ist.

6. Statorkern für einen Motor (10) nach einem der Ansprüche 1 bis 5, wobei in der Umfangsrichtung des Statorkerns ein erster konkaver Teil (113), der zu dem anderen Ende des inneren Umfangsteils (111) hin konkav ist, an einem Ende des inneren Umfangsteils (111) von mindestens einem ersten Siliziumstahlblech angeordnet ist, ein erster konvexer Teil (114), der von dem einen Ende des inneren Umfangsteils (111) weg konvex ist, an dem anderen Ende des inneren Umfangsteils (111) des mindestens einen ersten Siliziumstahlblechs angeordnet ist, und in der radialen Richtung des Statorkerns eine Breite des ersten konkaven Teils (113) und eine Breite des ersten konvexen Teils (114) kleiner als oder gleich einer Breite des inneren Umfangsteils (111) sind.

7. Statorkern für einen Motor (10) nach einem der Ansprüche 1 bis 6, wobei in der radialen Richtung des Statorkerns ein zweiter konvexer Teil (115), der dem zweiten Siliziumstahlblech zugewandt ist, an den anderen Enden eines oder mehrerer Zahnteile (112) des mindestens einen ersten Siliziumstahlblechs angeordnet ist, ein zweiter konkaver Teil (121), der von dem Zahnteil weg konkav ist, auf der inneren Umfangsoberfläche des zweiten Siliziumstahlblechs angeordnet ist, und in der radialen Richtung des Statorkerns eine Dicke des zweiten konvexen Teils (115) und eine Tiefe des zweiten konkaven Teils (121) kleiner als die Dicke des zweiten Siliziumstahlblechs sind; und/oder
in der radialen Richtung des Statorkerns ein zweiter konkaver Teil (121), der von dem zweiten Siliziumstahlblech weg konkav ist, an den anderen Enden des einen oder der mehreren Zahnteile (112) des mindestens einen ersten Siliziumstahlblechs angeordnet ist, ein zweiter konvexer Teil (115), der zu dem Zahnteil hin konvex ist, an der inneren Umfangsoberfläche des zweiten Siliziumstahlblechs angeordnet ist, und in der radialen Richtung des Statorkerns eine Dicke des zweiten konvexen Teils (115) und eine Tiefe des zweiten konkaven Teils (121) kleiner als die Dicke des zweiten Siliziumstahlblechs sind.

8. Statorkern für einen Motor (10) nach einem der Ansprüche 1 bis 7, wobei sich ein Material des ersten Siliziumstahlblechs von einem Material des zweiten Siliziumstahlblechs unterscheidet; und/oder
das Material des zweiten Siliziumstahlblechs nicht-orientierter Siliziumstahl ist, das Material des ersten Siliziumstahlblechs orientierter Siliziumstahl ist, und eine Orientierung des orientierten Siliziumstahls parallel zu der radialen Richtung des Statorkerns ist.

9. Statorkern für einen Motor (10) nach einem der Ansprüche 1 bis 8, wobei das erste Siliziumstahlblech durch Wickeln eines geraden streifenförmigen Siliziumstahlblechs (102) gebildet wird, das gerade streifenförmige Siliziumstahlblech (102) einen geraden streifenförmigen Boden und die Vielzahl von Zahnteilen (112), die in einer Erstreckungsrichtung des Bodens beabstandet sind, umfasst, ein Ende von jedem aus der Vielzahl von Zahnteilen (112) an einer selben Seite des Bodens befestigt ist, der Boden des geraden streifenförmigen Siliziumstahlblechs (102) gewickelt ist, um den inneren Umfangsteil (111)zu bilden, und das Zahnteil sich an einer Außenseite des inneren Umfangsteils (111) befindet.

10. Motor (10), wobei der Motor (10) einen Rotor und den Statorkern nach einem der Ansprüche 1 bis 9 umfasst, der Statorkern auf den Rotor aufgeschoben ist, und eine äußere Umfangsoberfläche des Rotors und innere Umfangsteile einer Vielzahl von Gruppen von ersten Siliziumstahlblechen (110) in dem Statorkern beabstandet sind.

11. Motor (10) nach Anspruch 10, wobei Zahnteile (112) in der Vielzahl von Gruppen von ersten Siliziumstahlblechen (110) sequenziell in einer axialen Richtung des Motors (10) angeordnet sind, um eine Vielzahl von Reihen von Zahnteilen (112) zu bilden; und
der Motor (10) ferner eine Statorwicklung umfasst, die Statorwicklung in einem Statorschlitz (1122) zwischen zwei benachbarten Reihen von Zahnteilen (112) aufgenommen wird, und die Statorwicklung eine Flachdrahtwicklung ist.

12. Herstellungsverfahren eines Stators (100), wobei das Herstellungsverfahren des Stators umfasst:
Verarbeiten (S1) eines Siliziumstahlblechs (101), um ein gerades streifenförmiges Siliziumstahlblech (102) zu erhalten, wobei das gerade streifenförmige Siliziumstahlblech (102) einen geraden streifenförmigen Boden und eine Vielzahl von Zahnteilen (112) umfasst, wobei die Vielzahl von Zahnteilen (112) in einer Erstreckungsrichtung des Bodens beabstandet sind und ein Ende jedes aus der Vielzahl von Zahnteilen (112) an einer gleichen Seite des Bodens befestigt ist;
Wickeln (S2) des geraden streifenförmigen Siliziumstahlblechs (102), um ein erstes Siliziumstahlblech zu bilden, wobei N erste Siliziumstahlbleche (110) sequenziell Ende an Ende verbunden sind, um eine Gruppe von ersten Siliziumstahlblechen (110) zu bilden, das erste Siliziumstahlblech eine 1/N-Bogenform aufweist, der Boden des geraden streifenförmigen Siliziumstahlblechs (102) gewickelt ist, um einen inneren Umfangsteil (111) zu bilden, die Vielzahl von Zahnteilen (112) an einer Außenseite des inneren Umfangsteils (111) befestigt ist, und N eine positive ganze Zahl größer als eins ist;
Montieren (S3) einer Statorwicklung in einen Statorschlitz (1122) von einer Außenseite einer Vielzahl von Gruppen von ersten Siliziumstahlblechen (110), wobei die Vielzahl von Gruppen von ersten Siliziumstahlblechen (110) benachbart in einer axialen Richtung des Stators angeordnet sind, Zahnteile (112) in der Vielzahl von Gruppen von ersten Siliziumstahlblechen (110) sequenziell in der axialen Richtung des Stators angeordnet sind, um eine Vielzahl von Reihen von Zahnteilen (112) zu bilden, und der Statorschlitz (1122) zwischen zwei benachbarten Reihen von Zahnteilen (112) gebildet ist; und
Verarbeiten des Siliziumstahlblechs, um eine Gruppe von zweiten Siliziumstahlblechen (120) zu erhalten, oder Wickeln des Siliziumstahlblechs, um ein zweites Siliziumstahlblech zu erhalten, wobei N zweite Siliziumstahlbleche (120) sequenziell Ende an Ende verbunden sind, um eine Gruppe von zweiten Siliziumstahlblechen (120) zu bilden, wobei jedes zweite Siliziumstahlblech eine 1/N-Bogenform aufweist und die eine Gruppe von zweiten Siliziumstahlblechen (120) eine Ringform aufweist; und Einsetzen der Vielzahl von Gruppen von ersten Siliziumstahlblechen (110), auf denen die Statorwicklung montiert ist, in eine Vielzahl von Gruppen von zweiten Siliziumstahlblechen (120) in der axialen Richtung des Stators, um den Stator zu bilden.

13. Herstellungsverfahren des Stators nach Anspruch 12, wobei das Montieren einer Statorwicklung in einen Statorschlitz (1122) von einer Außenseite einer Vielzahl von Gruppen von ersten Siliziumstahlblechen (110) umfasst:
Vorwickeln der Statorwicklung zu einer zentralisierten Wicklung und anschließendes Montieren der zentralisierten Wicklung in den Statorschlitz (1122) von der Außenseite der Vielzahl von Gruppen von ersten Siliziumstahlblechen (110); oder
Bilden der Statorwicklung zu einer kontinuierlichen Wellenwicklung und anschließendes Montieren der kontinuierlichen Wellenwicklung in den Statorschlitz (1122) von der Außenseite der Vielzahl von Gruppen von ersten Siliziumstahlblechen (110).

14. Antriebsstrang (2), wobei der Antriebsstrang (2) einen Übertragungsmechanismus und
einen Motor (10) umfasst und der Motor (10) Leistung durch den Übertragungsmechanismus ausgibt;
der Motor (10) den Statorkern nach einem der Ansprüche 1 bis 9 umfasst; oder
der Motor (10) den Stator umfasst, der durch das Herstellungsverfahren des Stators nach Anspruch 12 oder 13 hergestellt wird; oder
der Motor (10) der Motor (10) nach Anspruch 10 oder 11 ist.

15. Fahrzeug (1), wobei das Fahrzeug (1) Räder und den Antriebsstrang (2) nach Anspruch 14 umfasst und der Antriebsstrang (2) konfiguriert ist, um die Räder anzutreiben.

## Revendications

1. Noyau de stator pour un moteur (10), dans lequel le noyau de stator comprend une pluralité de groupes de premières tôles d'acier au silicium (110) et un ou plusieurs groupes de secondes tôles d'acier au silicium (120), chaque groupe de premières tôles d'acier au silicium (110) comprend une pluralité de premières tôles d'acier au silicium (110), la pluralité de premières tôles d'acier au silicium (110) dans chaque groupe de premières tôles d'acier au silicium (110) sont reliées bout à bout pour former une structure en forme d'anneau, la pluralité de groupes de premières tôles d'acier au silicium (110) sont agencés de manière adjacente dans une direction axiale du noyau de stator, chaque groupe de secondes tôles d'acier au silicium (120) est cylindrique, et le ou les groupes de secondes tôles d'acier au silicium (120) sont manchonnés sur des surfaces périphériques externes de la pluralité de groupes de premières tôles d'acier au silicium (110) ; et
chaque première tôle d'acier au silicium comprend une partie périphérique interne (111) et une pluralité de parties dent (112) espacées, une extrémité de chaque partie dent (112) est reliée à la partie périphérique interne (111), l'autre extrémité de chaque partie dent (112) est orientée vers une surface périphérique interne d'un groupe de secondes tôles d'acier au silicium (120), et dans une direction circonférentielle (C) du noyau de stator, une largeur de ladite extrémité de chaque partie dent est inférieure à une largeur de l'autre extrémité de chaque partie dent ;
**caractérisé en ce que** chaque groupe de secondes tôles d'acier au silicium (120) comprend une pluralité de secondes tôles d'acier au silicium (120), et la pluralité de secondes tôles d'acier au silicium (120) dans chaque groupe de secondes tôles d'acier au silicium (120) sont reliées bout à bout pour former une structure en forme d'anneau par le biais d'une structure de serrage ; et
dans lequel la quantité de secondes tôles d'acier au silicium (120) dans chaque groupe de secondes tôles d'acier au silicium (120) est inférieure à la quantité de premières tôles d'acier au silicium (110) dans chaque groupe de premières tôles d'acier au silicium (110).

2. Noyau de stator pour un moteur (10) selon la revendication 1, dans lequel la structure de serrage comporte une troisième partie convexe (123) et une troisième partie concave (122).

3. Noyau de stator pour un moteur (10) selon la revendication 1 ou 2, dans lequel, dans la direction circonférentielle (C) du noyau de stator, deux parois latérales qui appartiennent à deux parties dent (112) adjacentes dans chaque groupe de premières tôles d'acier au silicium (110) et qui sont proches l'une de l'autre sont parallèles dans une direction radiale du noyau de stator.

4. Noyau de stator pour un moteur (10) selon la revendication 1 à 3, dans lequel les parties dent (112) dans la pluralité de groupes de premières tôles d'acier au silicium (110) sont agencées séquentiellement dans la direction axiale du noyau de stator pour former une pluralité de rangées de parties dent (112) ; et
dans la direction circonférentielle (C) du noyau de stator, deux surfaces latérales qui appartiennent à deux rangées adjacentes de parties dent (112) et qui sont proches l'une de l'autre sont parallèles dans la direction radiale du noyau de stator.

5. Noyau de stator pour un moteur (10) selon l'une quelconque des revendications 1 à 4,
dans lequel, dans la direction radiale du noyau de stator, un rapport entre une épaisseur de la partie périphérique interne et une épaisseur de la partie dent est supérieur ou égal à 0,02 et inférieur ou égal à 0,08 ; et/ou
dans la direction radiale du noyau de stator, un rapport entre une épaisseur de la seconde tôle d'acier au silicium et l'épaisseur de la partie dent est supérieur ou égal à 1,2 et inférieur ou égal à 1,7 ; et/ou
il existe un espace entre les deux parties dent (112) adjacentes dans chaque groupe de premières tôles d'acier au silicium (110), et dans la direction circonférentielle du noyau de stator, un rapport entre une largeur maximale de la partie dent et une largeur de l'espace est supérieur ou égal à 1,1 et inférieur ou égal à 1,8.

6. Noyau de stator pour un moteur (10) selon l'une quelconque des revendications 1 à 5, dans lequel, dans la direction circonférentielle du noyau de stator, une première partie concave (113) qui est concave vers l'autre extrémité de la partie périphérique interne (111) est disposée au niveau d'une extrémité de la partie périphérique interne (111) d'au moins une première tôle d'acier au silicium, une première partie convexe (114) qui est convexe à l'écart de ladite extrémité de la partie périphérique interne (111) est disposée au niveau de l'autre extrémité de la partie périphérique interne (111) de l'au moins une première tôle d'acier au silicium, et dans la direction radiale du noyau de stator, une largeur de la première partie concave (113) et une largeur de la première partie convexe (114) sont inférieures ou égales à une largeur de la partie périphérique interne (111).

7. Noyau de stator pour un moteur (10) selon l'une quelconque des revendications 1 à 6,
dans lequel, dans la direction radiale du noyau de stator, une deuxième partie convexe (115) qui est orientée vers la seconde tôle d'acier au silicium est disposée au niveau des autres extrémités d'une ou plusieurs parties dent (112) de l'au moins une première tôle d'acier au silicium, une deuxième partie concave (121) qui est concave à l'écart de la partie dent est disposée sur la surface périphérique interne de la seconde tôle d'acier au silicium, et dans la direction radiale du noyau de stator, une épaisseur de la deuxième partie convexe (115) et une profondeur de la deuxième partie concave (121) sont inférieures à l'épaisseur de la seconde tôle d'acier au silicium ; et/ou
dans la direction radiale du noyau de stator, une deuxième partie concave (121) qui est concave à l'écart de la seconde tôle d'acier au silicium est disposée au niveau des autres extrémités de la ou des parties dent (112) de l'au moins une première tôle d'acier au silicium, une deuxième partie convexe (115) qui est convexe vers la partie dent est disposée sur la surface périphérique interne de la seconde tôle d'acier au silicium, et dans la direction radiale du noyau de stator, une épaisseur de la deuxième partie convexe (115) et une profondeur de la deuxième partie concave (121) sont inférieures à l'épaisseur de la seconde tôle d'acier au silicium.

8. Noyau de stator pour un moteur (10) selon l'une quelconque des revendications 1 à 7,
dans lequel un matériau de la première tôle d'acier au silicium est différent d'un matériau de la seconde tôle d'acier au silicium ; et/ou
le matériau de la seconde tôle d'acier au silicium est un acier au silicium non orienté, le matériau de la première tôle d'acier au silicium est un acier au silicium orienté, et une orientation de l'acier au silicium orienté est parallèle à la direction radiale du noyau de stator.

9. Noyau de stator pour un moteur (10) selon l'une quelconque des revendications 1 à 8, dans lequel la première tôle d'acier au silicium est formée par enroulement d'une tôle d'acier au silicium en forme de bande droite (102), la tôle d'acier au silicium en forme de bande droite (102) comprend un fond en forme de bande droite, et la pluralité de parties dent (112) qui sont espacées dans une direction d'extension du fond, une extrémité de chacune de la pluralité de parties dent (112) est fixée à un même côté du fond, le fond de la tôle d'acier au silicium en forme de bande droite (102) est enroulé pour former la partie périphérique interne (111), et la partie dent est située sur un côté externe de la partie périphérique interne (111).

10. Moteur (10), dans lequel le moteur (10) comprend un rotor et le noyau de stator selon l'une quelconque des revendications 1 à 9, le noyau de stator est manchonné sur le rotor, et une surface périphérique externe du rotor et des parties périphériques internes d'une pluralité de groupes de premières tôles d'acier au silicium (110) dans le noyau de stator sont espacées.

11. Moteur (10) selon la revendication 10, dans lequel des parties dent (112) dans la pluralité de groupes de premières tôles d'acier au silicium (110) sont agencées séquentiellement dans une direction axiale du moteur (10) pour former une pluralité de rangées de parties dent (112) ; et
le moteur (10) comprend en outre un enroulement statorique, l'enroulement statorique est logé dans une encoche de stator (1122) entre deux rangées adjacentes de parties dent (112), et l'enroulement statorique est un enroulement de fil plat.

12. Procédé de fabrication d'un stator (100), dans lequel le procédé de fabrication du stator comprend :
le traitement (S1) d'une tôle d'acier au silicium (101) pour obtenir une tôle d'acier au silicium en forme de bande droite (102), dans lequel la tôle d'acier au silicium en forme de bande droite (102) comprend un fond en forme de bande droite et une pluralité de parties dent (112), la pluralité de parties dent (112) sont espacées dans une direction d'extension du fond, et une extrémité de chacune de la pluralité de parties dent (112) est fixée à un même côté du fond ;
l'enroulement (S2) de la tôle d'acier au silicium en forme de bande droite (102) pour former une première tôle d'acier au silicium, dans lequel N premières tôles d'acier au silicium (110) sont reliées séquentiellement bout à bout pour former un groupe de premières tôles d'acier au silicium (110), la première tôle d'acier au silicium est en forme d'arc 1/N, le fond de la tôle d'acier au silicium en forme de bande droite (102) est enroulé pour former une partie périphérique interne (111), la pluralité de parties dent (112) sont fixées à un côté externe de la partie périphérique interne (111), et N est un entier positif supérieur à un ;
le montage (S3) d'un enroulement statorique dans une encoche de stator (1122) depuis un côté externe d'une pluralité de groupes de premières tôles d'acier au silicium (110), dans lequel la pluralité de groupes de premières tôles d'acier au silicium (110) sont agencées de manière adjacente dans une direction axiale du stator, des parties dent (112) dans la pluralité de groupes de premières tôles d'acier au silicium (110) sont agencées séquentiellement dans la direction axiale du stator pour former une pluralité de rangées de parties dent (112), et l'encoche de stator (1122) est formée entre deux rangées adjacentes de parties dent (112) ; et
le traitement de la tôle d'acier au silicium pour obtenir un groupe de secondes tôles d'acier au silicium (120), ou l'enroulement de la tôle d'acier au silicium pour obtenir une seconde tôle d'acier au silicium, dans lequel N secondes tôles d'acier au silicium (120) sont séquentiellement reliées bout à bout pour former un groupe de secondes tôles d'acier au silicium (120), chaque seconde tôle d'acier au silicium est en forme d'arc 1/N, et ledit groupe de secondes tôles d'acier au silicium (120) est en forme d'anneau ; et l'insertion de la pluralité de groupes de premières tôles d'acier au silicium (110) sur lesquelles l'enroulement statorique est monté dans une pluralité de groupes de secondes tôles d'acier au silicium (120) dans la direction axiale du stator, pour former le stator.

13. Procédé de fabrication du stator selon la revendication 12, dans lequel le montage d'un enroulement statorique dans une encoche de stator (1122) à partir d'un côté externe d'une pluralité de groupes de premières tôles d'acier au silicium (110) comprend :
le pré-enroulement de l'enroulement statorique dans un enroulement centralisé, puis le montage de l'enroulement centralisé dans l'encoche de stator (1122) depuis le côté externe de la pluralité de groupes de premières tôles d'acier au silicium (110) ; ou
la formation de l'enroulement statorique en un enroulement ondulé continu, puis le montage de l'enroulement ondulé continu dans l'encoche de stator (1122) depuis le côté externe de la pluralité de groupes de premières tôles d'acier au silicium (110).

14. Groupe motopropulseur (2), dans lequel le groupe motopropulseur (2) comprend un mécanisme de transmission et un moteur (10), et le moteur (10) délivre en sortie une puissance par le biais du mécanisme de transmission ;
le moteur (10) comprend le noyau de stator selon l'une quelconque des revendications 1 à 9 ; ou
le moteur (10) comprend le stator fabriqué par le procédé de fabrication du stator selon la revendication 12 ou 13 ; ou
le moteur (10) est le moteur (10) selon la revendication 10 ou 11.

15. Véhicule (1), dans lequel le véhicule (1) comprend des roues et le groupe motopropulseur (2) selon la revendication 14, et le groupe motopropulseur (2) est conçu pour entraîner les roues.
